(19) Europäisches Patentamt
European Patent Office
Office européen des brevets

(11) **EP 3 444 913 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
*H02J 3/14* *(2006.01)*    *H02J 3/38* *(2006.01)*

(21) Anmeldenummer: **18189819.8**

(22) Anmeldetag: **20.08.2018**

(54) **ENERGIEVERTEILUNGSVERFAHREN**

ENERGY DISTRIBUTION METHOD

PROCÉDÉ DE DISTRIBUTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2017 DE 102017118958**

(43) Veröffentlichungstag der Anmeldung:
**20.02.2019 Patentblatt 2019/08**

(73) Patentinhaber: **Schuch, Christian**
**24105 Kiel (DE)**

(72) Erfinder: **Schuch, Christian**
**24105 Kiel (DE)**

(74) Vertreter: **Shalibeik, Hotan**
**Heeschen Patentanwaltskanzlei**
**SHpatent**
**Stadtweg 7-9**
**21684 Stade (DE)**

(56) Entgegenhaltungen:
**DE-A1-102011 080 830    DE-A1-102012 224 128**
**US-A1- 2014 257 584**

**Beschreibung**

Die **Erfindung betrifft** ein Energieverteilungsverfahren für wenigstens zwei Verbrauchsstellen mit jeweils zugeordneten Energie-Verbrauchs-Datenverarbeitungseinheiten und wenigstens zwei Energieerzeugungsstellen mit jeweils vorgesehenen Energie-Erzeugungs-Datenverarbeitungseinheiten, wobei wenigstens eine der Energieerzeugungsstellen eine Erneuerbare-Energien-Anlage ist, wobei die Energie von wenigstens einer der Energieerzeugungsstellen über ein Energieverteilnetz zu wenigstens einer der Verbrauchsstellen übertragen wird, und wenigstens eine übergeordnete Energie-Datenverarbeitungsanlage zur Verarbeitung, Steuerung und Auswertung der zu verteilenden Energie vorgesehen ist, aufweisend die kontinuierlich ablaufenden Schritte:

- Erfassen des Energiebedarfs und/oder der Energiebedarfsänderung mittels der Energie-Verbrauchs-Datenverarbeitungseinheiten und Übermitteln des erfassten Energiebedarfs und/oder der erfassten Energiebedarfsänderung an die übergeordnete Energie-Datenverarbeitungsanlage;
- Erfassen der zur Verfügung stehenden hergestellten Energie / Energieleistung und/oder Energieleistungsänderung mittels der Energie-Erzeugungs-Datenverarbeitungseinheit und Übermitteln der erfassten Energie / Energieleistung an die wenigstens eine übergeordnete Energie-Datenverarbeitungsanlage;
- Bilanzieren der Energieentnahme und Energieerzeugung.

Im **Stand der Technik** sind unterschiedliche Energieverteilungsverfahren bekannt, um die hergestellte Energie und den Energiebedarf durch Verbraucher zu koordinieren.

Bei klassischen Verfahren zum Energiemanagement wird in schaltende und erfassende Anlagen differenziert. Schaltende Anlagen können dabei nochmals in passive und aktive Anlagen unterteilt sein. Erfassende Anlagen haben die Aufgabe Energieverbrauch zu messen und die Messergebnisse bereitzustellen. Schaltende Anlagen mit einer passiven Ausrichtung sind dazu ausgelegt innerhalb einer Entnahmestelle Lasten hinzu oder abzuschalten, ohne dass der Nutzer oder Verwalter der Entnahmestelle Einfluss darauf hat. Bei aktiven Schaltanlagen werden die Lasten durch den Nutzer oder einen dritten hinzu oder abgeschaltet.

Die Druckschrift DE 102015 111 198 A1 zeigt, wie mehrere unterschiedliche Akteure unter der Verwendung verschiedener Vorrichtungen ein Energiemanagementsystem betreiben.

Aus der Druckschrift US 2010/0238003 A1 ist ein System zum Bereitstellen einer Netzwerkinfrastruktur für Energiemanagement und -steuerung bekannt, bei dem ein Controller Powerline- und Wireless-Networking-Technologien integriert, um ein integriertes Netzwerk bereitzustellen, wobei ein Gateway Befehls- und Steuerungsdaten über das integrierte Netzwerk sendet und empfängt, und wobei sich Client-Geräte mit dem integrierten Netzwerk verbinden und eine Vielzahl von Funktionen ausführen können. Hierbei kann ein Gerätemodul Daten über das integrierte Netzwerk in Bezug auf ein bestimmtes Gerät senden und empfangen, wobei ein Panel-Messgerät Daten über das integrierte Netzwerk senden und empfangen, die an einem Verteilerfeld gemessen werden, wobei eine serielle Bridge verschiedene Geräte mit dem integrierten Netzwerk verbindet.

Weiter ist aus der Druckschrift CA 2 850 983 A1 ein in sich geschlossenes intelligentes elektrisches Schaltschrankgehäuse bekannt, das zwei oder mehr Leistungsschalter und entsprechende Messeinrichtungen aufweist.

In der Druckschrift DE 10 2016 101 021 A1 ist ein Verfahren zum Erkennen verschiedener in einem Versorgungsnetz vorhandener technischer Nutzer und deren Nutzungsverhalten offenbart, wobei basierend auf dem jeweiligen Gesamtnutzungswert oder Unterwerten desselben im Netzwerk in gleichen oder variablen Zeitintervallen über die Kombination von die von Sensoren gemessenen Daten, die sich auf anwenderspezifische Eigenschaften im Gesamtgebrauchswert beziehen, und von externen Sensoren ermittelte Plausibilitätsdaten, wie u.a. Datum, Uhrzeit und Temperatur, mittels einer Vielzahl von Algorithmen, die die Daten in einem jeweils unterschiedliche Art und Weise, verschiedene einzelne Benutzer erkannt werden und / oder der Systemzustand berechnet wird und mittels künstlicher Intelligenz und statistischer Methoden ein Überblick über die verschiedenen Algorithmierergebnisse erfolgt und anschließend über Koordination automatisch eine Entscheidung getroffen wird, ob ein bestimmter Benutzer oder eine Benutzergruppe erkannt wurde oder nicht, wobei die dem erkannten Benutzer oder der Benutzergruppe zugeordneten Daten in dem System gespeichert sind , bewertet und weiterverarbeitet.

Ferner ist aus der Druckschrift US 4,819,180 B1 ein Verfahren und System zum Regeln der Leistung bekannt, wobei diese an verschiedene kommerzielle oder private Nutzer abgegeben wird, wobei jeder Nutzer unterschiedliche Anforderungen an den Stromverbrauch hat, wobei der Energieverbrauch jedes Benutzers über ein ausgewähltes Echtzeit-Intervall gemessen wird.

Die Druckschrift US 2014/0257584 A1 offenbart ein Energiemanagementsystem, wobei dieses die Energie des Kunden verwaltet, wobei das Energiemanagementsystem eine Erfassungseinheit, einen Schätzer, einen Erzeuger und einen Controller umfasst und die Erfassungseinheit Daten in Bezug auf energiebezogene Vorrichtungen einschließlich Wassererhitzer, Stromgenerator, Batterie und Energieverbrauchsvorrichtung vom Kunden erfasst. Der Hersteller erstellt Betriebszeitpläne basierend auf der geschätzten Nachfrage und dem geschätzten Bedarf, um die Energiekosten des Kunden unter der Bedingung zu minimieren, dass überschüssige Energie, die entsorgt werden muss, wenn die Batterie vollständig geladen ist, minimiert wird. Die Steuerung steuert energieassoziierte Vorrichtungen basierend auf den Betriebsplänen.

Weiter offenbart die Druckschrift DE 10 2011 080 830 A1 einen Speicher für elektrische Energie, mit einer Steuerung, durch welche die Abgabe von elektrischer Energie an ein Stromnetz oder einen lokalen Energieverbraucher und/oder die Aufnahme von Energie aus dem Stromnetz oder von einem lokalen Energieerzeuger steuerbar ist.

Ferner ist aus der Druckschrift DE 10 2012 224 128 A1 ein Verfahren zum Betreiben eines elektrisch zu betreibenden Haushaltsgerätes bekannt, bei dem das Haushaltsgerät an ein intelligentes Stromnetz angeschlossen und ein gewünschter Betriebsschaltzeitpunkt an das intelligente Stromnetz übermittelt wird und wobei das intelligente Stromnetz dann Profilinformationen anhand des übertragenen, gewünschten Betriebsschaltzeitpunktes ermittelt und ein empfohlener Betriebsschaltzeitpunkt durch das intelligente Stromnetz festgelegt wird, wobei im Anschluss eine Übertragung an das Haushaltsgerät erfolgt und dieses in Abhängigkeit der Profilinformationen oder des empfohlenen Betriebsschaltpunkts ein- und/oder ausgeschaltet wird.

**Problematisch** am Stand der Technik ist, dass es keine tatsächlich umsetzbare nahezu in Echtzeitsteuerung fahrbare Energieverteilung gibt, wobei auch bedarfsgerecht Energie erzeugt und/oder verbraucht wird.

Der Erfindung liegt die **Aufgabe** zugrunde, ein Energieverteilungsverfahren bereitzustellen, mit dem volatiler Verbrauch und Einspeisung von elektrischer Energie unter dezentral und lokal verteilten Akteuren organisiert und reguliert werden kann, ohne dass dabei sensible Entnahmedaten und Einspeisungsdaten veröffentlicht werden und gleichwohl ein einzelner Verbraucher spontan ein Verbrauchsgerät starten kann.

Gelöst wird die Aufgabe durch die Merkmalskombination gemäß Hauptanspruch.

Weitere Lösungen finden sich in der textlichen Beschreibung und den Ausführungsvarianten / - beispielen.

Seitens des Erfinders wurde nunmehr erkannt, dass es mit den im Stand der Technik bekannten Verfahren nicht möglich ist, Energie effizient zu verteilen und insbesondere nicht nutzbare Energie, beispielsweise durch Überkapazitäten an erneuerbarer Energie, nämlich durch regenerative Energiequellen erzeugte Energie, sinnvoll zu verteilen. Hierzu wird im Folgenden beispielhaft ausgeführt, wobei dies nicht zu einer Beschränkung der Erfindung in deren Allgemeinheit führen soll, da es nur die Erfindung beispielhaft erläutern soll:

Es wird anhand eines Fallbeispiels dargelegt, welche Probleme durch dezentrale Einspeisung und Entnahme von elektrischer Energie unter Verwendung eines Verteilernetzes entstehen. Durch neue Technik, dessen Einsatz unter dem Titel "Internet of Things" zusammengefasst wird, sind viele Möglichkeiten entstanden, diese Probleme anzugehen und Lösungen zu entwickeln. Die Grundlage hierfür bildet die Verarbeitung großer Datenmengen, welche zeitnah Auskunft über das Verhalten der Einspeisenden und Entnehmenden Teilnehmer des Verteilernetzes geben.

Der enorme Zubau von Anlagen, welche elektrische Energie aus erneuerbaren Energien gewinnen, führte rasch zu einer Ausschöpfung der Kapazitäten des Verteilernetzes. Somit muss die überschüssige elektrische Arbeit in die überlagerte Netzebene gespeist werden. Dies führt wiederum zu einer Verringerung der Übertragungskapazitäten dieser Netzebene. Grundlegend ist das Stromverteilernetz so organisiert, dass nur die Last eingespeist werden darf, welche auch entnommen wird. Mit konventionellen Kraftwerken war dies bisher weniger problematisch, da große Produktionsstätten das Stromnetz speisen und bei Bedarf reguliert werden konnten. Die Organisation von vielen kleinen Kraftwerken, welche dazu auch noch geographisch weit gestreut sind und deren Einspeisung von unvorhersehbaren Umweltzuständen abhängt, stellt eine große Herausforderung für den Netzbetreiber dar. Es ist sehr schwer, Vorhersagen darüber zu treffen, wie lange und mit welcher Intensität die Sonne in einer Region scheint oder mit welcher durchschnittlichen Stärke der Wind dort weht. Somit hängt die Einspeisemenge vieler Erneuerbarer-Energie-Anlagen von unsicheren Faktoren ab.

Die von den Erneuerbarer-Energie-Anlagen eingespeiste elektrische Energie wird stark subventioniert und genießt diverse Sonderrechte gemäß dem Erneuerbare-Energien-Gesetz. Nach dem Erneuerbare- Energien-Gesetz gibt es einen Umwälzungsmechanismus, welcher die zu zahlende Subvention auf den Endverbraucher umlegt. Diese Umlage, auch EEG-Umlage genannt, beinhaltet die Subvention für die eingespeiste Arbeit sowie die Managementkosten und muss von jedem gezahlt werden, der Leistung aus dem Netz entnimmt. Je höher die zu zahlenden Subventionen, desto höher ist folglich auch die Umlage und somit auch der Strompreis für den Endverbraucher. Im Falle einer Windenergieanlage stellt es sich wie folgt dar, nämlich diese speist elektrische Energie in das Verteilernetz ein, sofern genug Wind weht. Nun ist es so, dass der Wind nicht mit konstanter Stärke weht und zwischenzeitlich auch mal rapide ab oder zunehmen kann. Im Falle der Abnahme des Windes kann eine Versorgungslücke entstehen. Im Falle der rapiden Zunahme des Windes kann es vorkommen, dass die mangels Wind entstandene Versorgungslücke beispielsweise durch das Hochfahren eines Kohlekraftwerks geschlossen wurde. In diesem Fall wird mehr elektrische Energie in das Netz eingespeist, als es zu den gegebenen Verwaltungsbedingungen aufnehmen kann. Das Verteilernetz wird mit Wechselstrom mit einer Frequenz von 50 Hz betrieben. Wenn mehr Leistung entnommen als eingespeist wird, sinkt diese Frequenz. Wenn weniger entnommen als eingespeist wird, erhöht sich diese Frequenz. Für ein Absinken der Frequenz stehen entsprechende Reserven zur Verfügung, welche das Netz kurzfristig stabilisieren können. Bei einer Überproduktion werden einspeisende Anlagen ausgeschaltet. In den meisten Fällen handelt es sich hierbei um Windenergieanlagen, weil diese mit einem kurzen Steuersignal sofort vom Netz genommen werden können. In diesem Fall hat der Betreiber der Anlage einen Anspruch auf Ausgleich der entgangen Einnahmen, welche ebenfalls über das Erneuerbare-Energien-Gesetz geregelt sind. Dieser Ausgleich wird ebenfalls durch die EEG-Umlage ausgeglichen. Der Stromverbraucher bezahlt demnach nicht nur für die elektrische Energie, die aus erneuerbaren Energien gewonnen wird, sondern auch für die elektrische Energie aus erneuerbaren Energien die nicht produziert wird. Um diesen Umstand Abhilfe zu verschaffen, ist es notwendig in Echtzeit über Produktion und Entnahme der jeweiligen Teilnehmer des Verteilernetzes Kenntnis zu haben. So wäre beispielsweise eine zusätzliche Abnahme von elektrischer Energie im Falle einer Überproduktion zu gesonderten Konditionen immer noch besser, als für einen Produktionsausfall zu zahlen. Durch das reine Monitoring der einspeisenden Anlagen, sowie der Entnahmestellen, entstehen riesige Datenmengen, welche direkt nach der Erhebung miteinander zu verknüpfen sind. Derzeitig wird beispielsweise das Gebiet der Bundesrepublik in imaginäre Regionen aufgeteilt, welche in der Energiewirtschaft auch als Bilanzkreise bekannt sind. Ziel dieser einzelnen Bilanzkreise ist es, stets ein ausgeglichenes Verhältnis von Einspeisung und Entnahme zu haben. Folglich muss innerhalb eines Bilanzkreises der Entnahme aus dem Verteilungsnetz eine entsprechende Einspeisung von elektrischer Energie gegenüberstehen. Dieses Gleichgewicht kann bei entsprechender Datenlage einfach, schnell und vor allem zeitnah errechnet werden.

Unter Big Data werden im Allgemeinen Datenmengen verstanden, die entweder zu groß, zu komplex, zu schnelllebig oder zu schwach strukturiert sind, um sie auf dem klassischen Wege auszuwerten. Es liegt jedem Big Data System immer das gleiche Basiskonzept zugrunde, welches sich zusammengefasst als 4 Schichtenmodell darstellen lässt. Jede Schicht die durchlaufen wird, behandelt ein Problem, das bei großen Datenmengen auftritt. Die einzelnen Schichten sind somit jeweils als Abstraktion eines bestimmten Verarbeitungsschritts anzusehen.

Die einzelnen Bearbeitungszyklen sind wie folgt zu Gliedern und zu bezeichnen:

1. Data Source Layer
2. Data Storage Layer
3. Data Processing/Analysis Layer und
4. Data Output Layer.

Die Data Source Layer Schicht behandelt die Menge aller Rohdaten hinsichtlich einer oder mehrerer Quellen. Hinsichtlich des Monitoring einer Erneuerbaren-Energie-Anlage befindet sich in dieser Schicht die Erhebungsgesamtheit sämtlicher Anlagendaten zum aktuellen Zeitpunkt. In dieser Schicht kann bereits erkannt werden, ob die vorhandenen Daten für das angestrebte Vorhaben ausreichen oder ob zusätzliche Quellen akquiriert werden müssen. Sollten mehr Daten vorhanden sein als benötigt werden, kann in dieser Schicht bereits die Entscheidung getroffen werden, welche Daten verwendet werden sollen. Die Ausnahmeregelungen für den Wegfall einer Datenquelle oder hinsichtlich auftretender Dateninkonsistenz werden ebenfalls auf dieser Ebene festgelegt. Für die Erfassung der Einspeisemenge ist es ausreichend, den zugehörigen kW (Kilowatt) Wert zu erheben. Aus der Sicht des Anlagenbetreibers kann es auch sinnvoll sein, die dem kW Wert zugehörige Windgeschwindigkeit zu erheben, um auf diesem Weg den Wirkungsgrad seiner Anlage zu ermitteln. Zur Ermittlung des Wartungsbedarfs ist es für den technischen Betreuer sinnvoll, beispielsweise über den Öldruck und das Schaltverhalten der Anlage in Kenntnis zu sein. Für eine meteorologische Auswertung des Standortes ist die Erhebung der Windrichtung unverzichtbar. Eine Windenergieanlage mit analogen Signalgebern produziert pro Signalausgang unendlich viele Daten zu jedem Betriebszeitpunkt. Es ist nicht möglich diese Daten ganzheitlich zu erfassen. Der Erhebungsumfang muss somit auf einen festgelegten Zustand reduziert werden. Somit wird in dieser Schicht für das Lastgangmonitoring eine Erhebung des kW Wertes im Abstand von 100 Millisekunden festgelegt, der erhobene Wert generiert einen Zeitstempel zum Erhebungszeitpunkt und ein Verweis auf den regionalen Standort wird hinzugefügt. Falls der Datenstrom enden sollte, können die einzelnen Komponenten neu gestartet werden. Sollte der Datenfluss weiterhin ausbleiben, könnte in den Wartungsmodus geschaltet werden. Für die Entnahmestellen ist eine Erhebung der Entnahme in Watt, eine Dokumentation der Lastsprünge und eine regionale Zuweisung ausreichend. Die entsprechenden Ausnahmen sind analog zur Einspeisungsanlage. Die lokale Erhebungseinheit, auch als Energie-Verbrauchs-Datenverarbeitungseinheit bezeichnet, kann auch als Quelle für ein übergeordnetes System, auch übergeordnete Energie-Datenverarbeitungsanlage, dienen.

In der Data Storage Layer Schicht werden die erhobenen Daten gespeichert. Es ist von Bedeutung, dass die gespeicherten Daten in einer Form vorhanden sind, welche es erlaubt, sie für den angedachten Verwendungszweck möglichst effektiv zu nutzen. Idealerweise erfolgt die Ablage in Datensätzen, welche bereits durch die entsprechenden Metadaten eindeutig zu identifizieren sind. Die am meisten verbreitete Methode ist die Ablage in einer Datenbank. Allerdings ist auch eine Ablage der Daten als Datei möglich. Moderne Systeme, z.B. Apache Hadoop DFS kombinieren beides. Für das Monitoring einer Erneuerbaren-Energie-Anlage durch ein lokales Modul ist der Einsatz einer Datenbank sinnvoll. Die Verarbeitung der erhobenen Daten erfolgt selbst mit einem freien Datenbankmanagementsystem wie mySQL im Millisekundenbereich. Je nach Gliederung der Daten ist der Zugriff in einem ähnlichen Zeitrahmen möglich. Aufgrund der höheren Zugriffszeit bei größeren Tabellen wird insbesondere in dieser Schicht eine Unterteilung in 2 Tabellen festgelegt, wobei die erste Tabelle als "Speed-Table" und die zweite als "Storage- Table" bezeichnet werden kann. Der Speed-Table wird mit den Daten aus Schicht 1 gefüllt und in seinem Umfang begrenzt, der Storage-Table erhalt bei Überschreitung der Begrenzung die Daten aus dem Speed-Table nach dem FiFo Prinzip, wodurch die übertragenen Daten aus dem Speed-Table entfernt werden können, ohne das es zu einem Informationsverlust kommt. Durch die Begrenzung des Volumens des Speed-Table ist somit ein dauerhaft schneller Zugriff auf die Daten innerhalb der gesetzten Grenze möglich. Für die Entnahmestelle wird das gleiche Verfahren eingesetzt, es handelt sich nun eben nicht um Einspeisungen sondern um Entnahmen. Zusätzlich wird für die Veränderung der Entnahmemenge eine weitere Tabelle genutzt, in welcher die einzelnen Lastsprünge bei sich änderndem Entnahmeverhalten dokumentiert werden. Eine entsprechende Gliederung der Ablage erleichtert die spätere Auffindung und automatisierte Verarbeitung. So ist es effektiv den Storage-Table in festgelegten Intervallen abzuspalten. Wenn beispielsweise am Ende eines Tages der gesamte Inhalt des Storage-Table in eine das Tagesdatum bezeichnende Tabelle übertragen wird, ist die Erhebungsgesamtheit eines bestimmten Tages über die Bezeichnung der Tabelle zu ermitteln. Sollten mehrere verschiedene Erhebungen vorhanden sein, reicht es aus, der Tagesbezeichnung einen entsprechenden Zusatz hinzuzufügen. Da es sich bei diesem Ausführungsbeispiel um dezentrale Erhebungseinheiten handelt, wird auf dieser Ebene ebenfalls festgelegt, ob parallel zu der lokalen Ablage auch eine Speicherung auf einem zentralen Server stattfindet. Durch die damit entstehende Redundanz ist eine höhere Datensicherheit gewährleistet. Das einfache Duplizieren von Datensätzen verdoppelt allerdings das notwendige Speichervolumen.

In der Data Processing/Analysis Layer Schicht werden die gespeicherten Daten verwendet. Die einzelnen Datensätze werden hier entweder zu Ergebnissen zusammengefasst, oder bezüglich eines gegebenen Informationsinteresses analysiert. Hinsichtlich der einspeisenden Anlagen wird in dieser Schicht insbesondere der Sekundenmittelwert errechnet. Für die Entnahmestellen findet in dieser Schicht die Verknüpfung von Entnahmedaten und Lastsprung statt. Es werden Einspeise- und Entnahmeprofile erstellt, welche sich mit zunehmender Datenmenge immer präzisere Rückschlusse auf zukünftiges Verhalten zulassen. Der Lastsprung für die Leistungsaufnahme einer Waschmaschine ist beispielsweise immer ähnlich. Aufgrund der vorhandenen Entnahmedaten zu diesem Lastsprung ist es möglich, die entsprechende Entnahme und den Entnahmezeitraum präzise zu bestimmen. Die Effizienz dieser Ebene hängt stark von den getroffenen Entscheidungen in Schicht 1 ab. Sollte die gesamte Historie in einer Tabelle zusammengefasst sein, so muss jede Anfrage die gewünschten Kriterien sehr zeitaufwendig aus einer immer größer werdenden Menge von Daten heraussuchen. Durch eine gegliederte Ablage mit entsprechenden Metadaten kann ein gewünschtes Kriterium gezielt abgefragt, verarbeitet und analysiert werden. Es müsste in dieser Ebene entschieden werden, ob die Verarbeitung der Daten auf den lokalen Modulen oder auf dem zentralen Server stattfinden soll. Auf dem Server werden in dieser Ebene die Daten der einzelnen Erhebungseinheiten zusammengeführt.

In der Data Output Layer Schicht werden die Ergebnisse der Datenzusammenführung und/oder der Analyse ausgegeben. Die Ausgabe kann beispielsweise in einer für den Menschen lesbaren Form durch ein Display oder einen Bildschirm erfolgen. Eine weitere Verfahrensweise hat für das Fallbeispiel eine besondere Bedeutung, da gemäß der Beschreibung der vorangegangenen Schichten nun viele kleine Big Data Inseln entstanden sind, dessen Ergebnisse nun zusammengeführt werden müssen. Somit wird in dieser Schicht die Übertragung der Ergebnisse der lokalen Datenverarbeitung an einen zentralen Server festgelegt. Der Server gibt in dieser Ebene hinsichtlich des Fallbeispiels das Gleichgewicht zwischen Einspeisung und Entnahme aus.

Das Big Data Basiskonzept ist daher sehr gut geeignet, um die Problematik des Fallbeispiels zu lösen. Die Abstraktion der einzelnen Schichten bietet genug Gestaltungsfreiheit, um auf etwaige sich in der Praxis ergebenden Abweichungen zu reagieren. Zudem ist das Modell proportional zum Hardwareeinsatz skalierbar. Somit kann der steigende Bedarf an Speicher und Rechenleistung, welcher durch Zunahme an Teilnehmern des Verbundes entsteht, durch die lokalen Module kompensiert werden. Eine Organisation der Informationen durch mehrere Datenverarbeitungssysteme kann ebenfalls mit dem Basismodell realisiert werden. Wie bereits in der Beschreibung der Schicht "Data Output Layer" angedeutet, kann jede einzelne Erhebungseinheit Ihre Ergebnisse an einen zentralen Server senden. Somit ist die Ausgabe der dezentralen Erhebungseinheit der Input der zentralen Erhebungseinheit und das beschriebene Modell lässt sich analog anwenden. Ebenso kann durch eine redundante Datenverarbeitung eine besonders hohe Datensicherheit erlangt werden. Dies ist für Nutzung der Daten zu Abrechnungszwecken besonders bedeutend, da ein Verlust oder eine Inkonsistenz der Daten die korrekte Abrechnung unmöglich macht. Durch die lokale Aufbereitung der Daten bezüglich des Informationsinteresses wird hierdurch das zu übertragende Datenvolumen beträchtlich verringert. Durch die genaue Kenntnis der regionalen Einspeisungs- und Entnahmedaten ergeben sich zudem mehrere komfortable Möglichkeiten bezüglich Management und Vermarktung. Wenn Einspeisungsanlagen und Entnahmestellen innerhalb der gleichen Region liegen, ist es so möglich diese über die Datensätze miteinander zu verknüpfen. Durch diese Verknüpfung kann nun die Überlast oder Unterlast einer Region ermittelt werden. Das Ungleichgewicht kann durch Allokation an oder von einer benachbarten Region ausgeglichen werden.

Es besteht für den Anlagenbetreiber die Möglichkeit, seine eingespeiste elektrische Energie direkt an den Endkunden zu vermarkten, da er über den Nachweis verfügt, dass er die entnommene Leistung zum gleichen Zeitpunkt eingespeist hat. Durch mehrere Akteure innerhalb einer Region ist auch eine direkte Vernetzung dieser untereinander denkbar. Neben dem direkten Informationsaustausch ist bei diesem Szenario auch gleich eine mehrfache Redundanz der Verbindung zu einem zentralen Server vorhanden. Sollte das Gateway einer Einheit ausfallen, kann die Verbindung einer anderen Einheit genutzt werden. Der erwähnten Abschaltung zur Gewährleistung der Netzstabilität kann hierdurch ebenfalls entgegengewirkt werden. Für den Anlagenbetreiber ist es wirtschaftlicher wenn er im Falle einer Überlast einen reduzierten Preis für seine elektrische Energie aufruft, sofern dieser die Entschädigungszahlung übersteigt. Durch die regionale Beschränkung dieses Angebots führt dessen Wahrnehmung durch den Verbraucher ebenfalls zu Netzstabilität, allerdings ohne Abschaltung der Anlage. Für die Reaktion auf ein Lastenungleichgewicht ist der Einsatz von Hardware zur Steuerung von Betriebsgeräten innerhalb einer Entnahmestelle von immenser Bedeutung. So können im Falle einer Überlast innerhalb einer Region die jeweiligen Entnahmestellen durch geringere Preise für diesen Zeitraum zu einem höheren Verbrauch durch eine entsprechenden Hinweis motiviert werden. Zudem ist es möglich auf derartige Ereignisse automatisch zu reagieren. So kann Beispielsweise morgens die Waschmaschine mit Wäsche befüllt werden und das System schaltet diese ein, sobald der Stromtarif günstig ist. Durch den Einsatz eines solchen Systems ist ebenfalls eine Bestimmung der Entnahme möglich, sogar bevor diese stattfindet, da über die bereits erwähnte Verknüpfung von Entnahmelast und Lastsprung seitens der Steuereinheit vorab mitgeteilt werden kann, dass eine bestimmte Entnahmelast geschaltet wird. Somit kann der Versorger Kenntnis über eine anstehende Unterlast erlangen noch bevor diese tatsächlich entsteht. Somit kann auch im Vorwege auf diese Zustand reagiert werden und eine Ausgleichsmenge beschafft werden. Dies kann durch das Hinzufügen einer zusätzlichen Verknüpfung geschehen. Idealerweise ist die Beschaffung zum Zeitpunkt des Bedarfs abgeschlossen.

Hinsichtlich des Datenschutzes gibt es ebenfalls keine Bedenken, da es sich bei den Entnahmedaten der Verbrauchsstelle um sensible und schützenswerte Daten handelt und hier direkt Bezug auf das beschriebene Modell genommen werden kann, da die exakten Entnahmedaten, inklusive der Lastsprünge, lokal gespeichert und folglich von außen nicht erreichbar sind. Für die Übertragung werden diese Daten anonymisiert. Dies geschieht im konkreten durch die Zuweisung einer Nutzer- ID. Durch die regionale Bündelung wird der Nutzer-ID zugewiesene Entnahmewert mit den restlichen Entnahmewerten der in der Region vorhandenen Nutzer aufsummiert und in einem regionalen Entnahmewert unter Verwendung einer Region- ID erfasst. Nach der Zusammenfassung ist es unmöglich zu bestimmen, wie viele Nutzer und vor allem auch welche Nutzer in dem regionalen Entnahmewert zusammengefasst wurden. Für den Anlagenbetreiber gilt das Beispiel analog.

Dem Versorger stehen die Lastgangdaten des jeweiligen Bilanzkreises zur Verfügung. Anhand dieser kann er abschätzen in welchem Umfang er Energie besorgen muss um die jeweiligen Entnahmen auszugleichen. Der Bilanzkreisverantwortliche muss immer zum Vortag einen Fahrplan bekanntgeben, inwiefern er gedenkt dieses Vorhaben zu realisieren. Der Fahrplan ist in Intervalle zu 15 Minuten gegliedert. Genau diese Verfahrensweise birgt ein großes Risiko für einen kleinen Anlagenbetreiber bezüglich einer direkten Vermarktung an den Endkunden. Sollte die vom Anlagenbetreiber eingespeiste Menge nicht ausreichen, um den Entnahmebedarf zu decken, muss der Netzbetreiber die entstandene Unterlast ausgleichen. Der Anlagenbetreiber muss dem Netzbetreiber in diesem Fall die Kosten für den Einsatz von Regelenergie ersetzen. Die kurzfristige Besorgung von Regelenergie kann sehr kostspielig sein. Somit kann es durchaus passieren, dass die entstandenen Mehrkosten das Gesamtergebnis des Anlagenbetreibers erheblich verschlechtern. Durch die beschriebene Informationsteilung kann sich der kleine Anlagenbetreiber die Regelenergie allerdings auch selber besorgen. Hierfür ist eine sehr schnelle Reaktionszeit und die Verknüpfung mit einem anderen Anlagenbetreiber notwendig. Für diesen Zweck ist beispielsweise eine Biogasanlage sehr gut geeignet, da diese auch bei Nacht und Flaute konstant einspeisen kann und regulierbar ist. Dieser Ausgleich muss natürlich ebenfalls vergütet werden. Allerdings kann hier bezüglich der Vergütung im Vorfeld eine Regelung getroffen werden, wodurch das Risiko kalkulierbar wird. Auf dem klassischen Weg erfährt der Versorgungsbetrieb die tatsächliche Entnahme eines Haushaltes erst mit der Ablesung des Stromzählers am Jahresende.

Nachfolgend wird die Erfindung in ihrer allgemeinen Form angegeben (Lösung):

Das Energieverteilungsverfahren für wenigstens zwei Verbrauchsstellen mit jeweils zugeordneten Energie-Verbrauchs-Datenverarbeitungseinheiten und wenigstens zwei Energieerzeugungsstellen mit jeweils vorgesehenen Energie-Erzeugungs-Datenverarbeitungseinheiten, wobei wenigstens eine der Energieerzeugungsstellen eine Erneuerbare-Energien-Anlage ist, wobei die Energie von wenigstens einer der Energieerzeugungsstellen über ein Energieverteilnetz zu wenigstens einer der Verbrauchsstellen übertragen wird, und wenigstens eine übergeordnete Energie-Datenverarbeitungsanlage zur Verarbeitung, Steuerung und Auswertung der zu verteilenden Energie vorgesehen ist, weist die kontinuierlich ablaufenden Schritte auf:

- Erfassen des Energiebedarfs und/oder der Energiebedarfsänderung mittels der Energie-Verbrauchs-Datenverarbeitungseinheiten und Übermitteln des erfassten Energiebedarfs und/oder der erfassten Energiebedarfsänderung an die übergeordnete Energie-Datenverarbeitungsanlage;
- Erfassen der zur Verfügung stehenden hergestellten Energie / Energieleistung und/oder Energieleistungsänderung mittels der Energie-Erzeugungs-Datenverarbeitungseinheit und Übermitteln der erfassten Energie / Energieleistung an die wenigstens eine übergeordnete Energie-Datenverarbeitungsanlage;

- Bilanzieren der Energieentnahme und Energieerzeugung;

wobei die Erfindung dadurch gekennzeichnet ist, dass
in wenigstens einer Verbrauchsstelle wenigstens ein vorwählbares später automatisch fernstartbares Verbrauchsgerät mit bekanntem Energieverbrauch für eine zukünftige Inbetriebnahme unter Hinzunahme der Nutzung der Energie-Verbrauchs-Datenverarbeitungseinheiten und entsprechender Übermittlung an die übergeordnete Energie-Datenverarbeitungsanlage freigegeben wird, wobei deren Start und damit Energieentnahme aus dem Energieverteilnetz durch die übergeordnete Energie-Datenverarbeitungsanlage oder den Verbraucher selbst ausgeführt wird,
wobei die Energieversorgung des Verbrauchsgerätes zeitverzögert erfolgt.

Insbesondere kann vor der Entstehung und / oder des Wegfalls des Strombedarfs der Bedarf gemeldet werden, so dass ein bedarfsgerechtes Schalten möglich wird.

Weiter kann das Energieverteilungsverfahren derart arbeiten, dass bei Prognose durch Prognosesensoren / -modelle für Erneuerbare-Energie-Anlagen und / oder Detektion einer erhöhten zur Verfügung stehenden Energie/ Energieleistung durch die wenigstens eine Erneuerbare-Energien-Anlage eine Fernaktivierung durch die übergeordnete Energie-Datenverarbeitungsanlage in wenigstens einer Verbrauchsstelle wenigstens des einen vorgewählten fernstartbaren Verbrauchsgerätes mit bekanntem Energieverbrauch erfolgt, so dass Energie in dem Verbrauchsgerät verbraucht wird, wobei dieser Verbrauch durch den Verbraucher gewollt und akzeptiert ist.

Diesbezüglich kann

- bei manueller Aktivierung eines Verbrauchsgerätes in der Verbrauchsstelle die Zeitverzögerung im Bereich von 20 bis 100 ms oder 25 bis 60 ms oder 30 bis 50 ms liegen oder
- bei durch die übergeordnete Energie-Datenverarbeitungsanlage initiierten Aktivierung die Zeitverzögerung im Bereich von 20 ms bis zu mehreren Tagen oder Wochen liegen, je nachdem, welche maximale Wartezeit und/oder Aktivierungs-Zeitfenster durch den Verbraucher oder durch das Verbrauchsgerät spezifiziert wurde.

Bei Detektion eines erhöhten Energiebedarfs kann eine durch die übergeordnete Energie-Datenverarbeitungsanlage initiierte zusätzliche Aktivierung einer Energieeinspeisung durch eine Energieerzeugungsstelle und/oder eines Energiespeichers erfolgen.

Erst im Anschluss an die Energieeinspeisung kann durch eine der Energieerzeugungsstellen eine Entnahme an der Verbrauchsstelle erfolgen.

Wenigstens ein Energiespeicher kann innerhalb des Energieverteilernetzes vorgesehen sein, wobei eine zusätzliche Speicherung durch die übergeordnete Energie-Datenverarbeitungsanlage initiiert werden kann.

Das Energieverteilnetz kann mit den daran angeschlossenen Verbrauchsstellen und Energieerzeugungsstellen in Abschnitte aufgeteilt werden.

Die Verbrauchsstellen und Einspeisestellen können mittels einer hierarchischen Schichtenarchitektur referenziert werden, wobei dies über die Gemeinde und/oder den Kreis und/oder das Bundesland und/oder das Land erfolgt, insbesondere über eine Verwaltungsstruktur des Landes, wobei durch die übergeordnete Energie-Datenverarbeitungsanlage Energiebilanzen entsprechend der Schichtenarchitektur auf den einzelnen Schichten gebildet werden. Die Verteilung kann aufgrund einer hierarchischen Schichtenarchitektur erfolgen. Am Beispiel Deutschland: Innerhalb einer Gemeinde befinden sich 1 bis n Einspeiser und Verbraucher. Diese werden miteinander bilanziert. Das Ergebnis der Bilanzierung ist ein Einspeisungs- oder Verbrauchsüberschuss (im sehr unwahrscheinlichen Szenario ist die Bilanz ausgeglichen). Es gibt also eine bekannte Bilanz der Gemeinde. Ein Kreis enthält 1 bis n Gemeinden. Sämtliche Gemeinden verfügen über eine Bilanz. Diese können innerhalb des Kreis miteinander bilanziert werden. Das Ergebnis der Bilanzierung ist ein Einspeisungs- oder Verbrauchsüberschuss (im sehr unwahrscheinlichen Szenario ist die Bilanz ausgeglichen). Es gibt also eine bekannte Bilanz des Kreises. Ein Bundesland enthält 1 bis n Kreise. Sämtliche Kreise verfügen über eine Bilanz. Diese können innerhalb des Bundeslandes miteinander bilanziert werden. Das Ergebnis der Bilanzierung ist ein Einspeisungs- oder Verbrauchsüberschuss (im sehr unwahrscheinlichen Szenario ist die Bilanz ausgeglichen). Es gibt also eine bekannte Bilanz des Bundeslandes. Deutschland enthält mehrere Bundesländer, welche jeweils eine Bilanz aufweisen. Aus diesen kann jeweils die aktuelle Bilanz für Deutschland gebildet werden und eine besonders Vorteilhafte Abgabe an anliegende Länder wird aufgrund der geographischen Lage der Bundesländer ersichtlich. Idealerweise verfügt das anliegende Land über eine ähnliche Verwaltungsstruktur.

Das Verteilen und Verbrauchen der Energie kann insbesondere mit kurzen Distanzen erfolgen. Siehe hierzu weiter oben.

Die übergeordneten Energie-Datenverarbeitungsanlage Energiebilanzen können nach folgender Formel bestimmt werden:

$$s_0 = \sum_{i=0}^{|S|} z_{i2} - z_{i1} \; \text{für alle } z_1 \in VB \text{ und } z_2 \in EB \text{ mit } VB \times EB \in S$$

$$s_1 = s_0 + \sum_{i=0}^{|RB|} z_i \; \text{für alle } z \in RB$$

mit

V := {x | x ist Verbraucher}
E := {x | x ist Einspeiser}
G := {x | x ist Verwaltungsschlüssel} $\quad P := \{x \mid x \in \mathbb{R}\}$
R := {x | x ∈ $\{0,1\}^8$}

$$VG \subseteq V \times G$$

$$EG \subseteq E \times G$$

$$VB \subseteq VG \times P$$

$$EB \subseteq EG \times P$$

$$RB \subseteq R \times P$$

$$S \subseteq VB \times EB$$

VG := {(x,y) | y ist Standort von x}
EG := {(x,y) | y ist Standort von x}
VB := {((x,y), z) | z ist Strombedarf des Verbraucher x am Standort y}
EB := {((x,y), z) | z ist Einspeisung des Einspeisers x am Standort y}
RB := {(($x_1, x_2, x_3, x_4, x_5, x_6, x_7, x_8$),z) | z ist Lastsprung durch Relaisstellung $x_1, x_2, x_3, x_4, x_5, x_6, x_7, x_8$}
S := {((($x_1, y_1$), $z_1$); (($x_2, y_2$), $z_2$)) | $y_1 = y_2$}
VR := {((($x_1, x_2, x_3, x_4, x_5, x_6, x_7, x_8$), z), x) | z ist Lastsprung der Relaisstellung für Verbraucher x}
ST := {(($x_1,y_1$),$z_1$),(($x_2,y_2$), $z_2$)) | $y_1 = y_2$ und $y_1$ ist fix gesetzt}.

Zur Steuerung und/oder Auswertung und/oder Kontrolle und/oder Schaltung und/oder Aktivierung / Deaktivierung von Energie kann insbesondere, ein oder mehrere Geräte, auch in Kombination miteinander, ausgewählt aus der Liste vorgesehen werden:

- in der übergeordnete Energie-Datenverarbeitungsanlage:

  - Server;
  - Managementserver;
  - Datenbankserver;
  - Abrechnungsserver;

- in der Energie-Erzeugungs-Datenverarbeitungseinheiten:

- Erfassungsmodul;
- Managementmodul;
- Schaltmodul;

- in der Energie-Verbrauchs-Datenverarbeitungseinheiten:

  - Erfassungsmodul;
  - Managementmodul;
  - Schaltmodul;
    wobei
  - das jeweilige Schaltmodul das jeweilige Betriebsgerät und/oder die jeweilige Einspeisungsanlage steuert,
  - das jeweilige Erfassungsmodul eine Inbetriebnahme des jeweiligen Schaltmoduls und einen Status eines Energieflusses detektiert, parametrisiert und die Information an das jeweilige Managementmodul sendet,
  - das jeweilige Managementmodul Schaltsignale an das jeweilige Schaltmodul sendet und vom jeweiligen Schaltmodul eine Rückmeldung über einen Schaltstatus erhält, in welchem Zustand es sich befindet,
  - das jeweilige Managementmodul Entnahmedaten und optional Informationen über den Schaltstatus an den jeweiligen Server sendet,
  - der jeweilige Einspeiser eine Einspeisungsmenge und weitere Betriebsdaten als Einspeisungsdaten an das jeweilige Managementmodul sendet, wobei das jeweilige Managementmodul diese Daten an den jeweiligen Server sendet,
  - der jeweilige Server die Einspeisungsdaten mit den Informationen über den Schaltzustand einer jeweiligen Entnahmestelle empfängt,
  - der jeweilige Server die Einspeisungsdaten und weitere Betriebsdaten eines jeweiligen Einspeisers empfängt,
  - die Instanz Datenbankserver jeden Datensatz vom jeweiligen Einspeiser und von der jeweiligen Entnahmestelle eindeutig einander zuordnet,
  - die Instanz Abrechnungsserver Einspeisungs- und Entnahmemengedaten nach definierten Kriterien zusammenführt,
  - die Instanz Managementserver Schaltsignale an die jeweilige Entnahmestelle sendet.

Die durch die übergeordnete Energie-Datenverarbeitungsanlage initiierte Energieentnahme und/oder Energieherstellung und/oder Energielieferung kann insbesondere mit einem anderen Energietarif abgerechnet werden.

Nachfolgend werden noch weitere nicht einschränkende Ausführungen die Erfindung betreffend gemacht. Es handelt sich um weitere konkretere Ausführungsvarianten, die jedoch nicht die Allgemeinheit der Erfindung beschränken sollen:

Die erfinderische Energiemanagementsystem-Vorrichtung umfassend eine Schalt- und Messanlage für die Einspeisung und Entnahme von elektrischen Energiemengen, z.B. für SmartGrid EE.

Das erfinderische Energiemanagementsystem-Verfahren umfasst die Verfahrensschritte zur Regelung elektrischer Energie mit mindestens einem Verbraucher und Erzeuger als eine Ausführung des Energiemanagementsystems.

Das erfinderische Energiemanagementsystem-Verfahren umfasst weiter die Verfahrensschritte zum Logging, Monitoring und Prognostizieren realer und zukünftiger Strommengen und zur Simulation von Zuständen des Energiemanagementsystems, allgemein virtuelles Kraftwerk genannt.

Die Erfindung betrifft eine Vorrichtung zum Messen und Regeln von elektrischer Energie innerhalb von Wohnungen, Gewerbebetrieben, Industriebetrieben und Kraftwerken, insbesondere Kraftwerken, welche elektrische Energie aus Wind, Sonne, Gas, Geothermie und Kraft-Wärme-Kopplung gewinnen.

Eine Vorrichtung zum Messen und Regeln elektrischer Energie dient dazu die Menge der eingespeisten und entnommenen elektrischen Energie zu ermitteln, um diese gezielt zusammenzuführen. Dabei kommt jeweils zumindest ein Managementmodul, ein Erfassungsmodul und ein Schaltmodul zum Einsatz. Ergänzend können jeweils Adaptionsmodule genutzt werden, um individuelle Anpassungen vornehmen zu können.

Das Erfassungsmodul dient hierbei der Erfassung des elektrischen Energieflusses. Das Schaltmodul dient dazu um Entnahmegeräte hinzu oder abzuschalten. Das Managementmodul dient zur Steuerung des Schaltmoduls, zur Speicherung und Auswertung der Daten des Schaltmoduls und des Erfassungsmoduls und der Übertragung der Daten, z.B. an einen externen Computer.

Das Managementmodul kann auch ohne das Schaltmodul Schaltungen auslösen, sofern es an eine vorhandene Vorrichtung angeschlossen ist, welche dies möglich macht. Die Übertragung von Entnahmedaten, Schaltsignalen und elektrischer Energie erfolgt galvanisch getrennt voneinander, um einen zuverlässigen Betrieb zu gewährleisten.

Für die modulare Adaption an bestehende Systeme, welche den Energiefluss innerhalb einer Wohn-, Gewerbe oder Industrieeinheit steuern, wird ein Adaptionsmodul verwendet, welches den Gegebenheit individuell angepasst werden kann. Somit brauchen bereits bestehende Installationen nur mit dem Managementmodul versehen werden um die Funktionalität des Systems bereitzustellen.

Weiterhin sind für die bekannten Systeme des Standes der Technik weitere Probleme und Unzulänglichkeiten bekannt, welche im allgemeinen als Smart-Meter oder Smart-Home-System bezeichnet werden, und bei denen die Notwendigkeit diverser Adaptions- und Bus-Systeme besteht. So sehen es einige Systeme vor, dass jeder Lichtschalter und jede Steckdose durch eine "smarte" Variante ersetzt werden müssen. Dies zieht aufwendige Umbauten und hohe Kosten nach sich.

Ein weiteres Problem des Standes der Technik ist es, dass die Daten über das Entnahmeverhalten einzelner Geräte an eine Vermittlungsplattform gesendet werden und diese Daten Dritten zugänglich zu machen. Es gibt mehrere Gründe warum dieses Vorgehen sehr unvorteilhaft ist. Es lässt sich anhand dieser Daten das Entnahmeverhalten des Nutzers ableiten. Die Möglichkeiten welche für unbefugte Dritte bei Kenntnis der genauen Entnahmedaten einer Entnahmestelle entstehen sind nicht unbedeutend. Aus den Lastgangdaten lässt sich der Ruhepuls einer Entnahmestelle ermitteln, aus welchem sich das Verhalten eines Nutzers innerhalb seiner Wohnung ableiten lässt. Somit wüsste beispielsweise ein Einbrecher, wann er freie Bahn hat. Ein Hersteller von Unterhaltungselektronik könnte ermitteln in welchen Regionen besonders hohes Absatzpotential besteht. Es sind auch Rückschlüsse über das Sozialverhalten möglich, ob der Nutzer beispielsweise viel fernsieht oder häufig vor dem Computer sitzt.

Diesseits werden nur lokale Analysen der Verbraucher und der Produzenten vorgenommen.

Umbauten an der Hausinstallation sind bei der diesseitigen Erfindung unnötig, weil die Lastenregulierung direkt über die Abspaltung der Hauptphase im jeweiligen Objekt erfolgen kann.

Weiter wird der Mangel eines fehlenden ganzheitlichen Ansatzes mit einer quasi Echtzeitverarbeitung von Energie-Informationen beim Stand der Technik durch die Erfinderische Vorrichtung und das erfinderische Verfahren beseitigt.

Voraussetzung für den einfachen Einsatz der Erfindung ist lediglich der Zugriff auf bereitstehende Verbrauchs- und Zufuhrinformationen. Dabei weisen Nutzeinheiten Erfassungsmodule auf, welche die Einspeisungs- oder Entnahmemenge erfassen und welche eigenständig oder in Verbindung mit einem internetfähigen Gerät mit dem System kommunizieren. Das nachfolgend beschriebene System enthält ein eigenes Erfassungsmodul, welches mit jedem Medium kompatibel ist, welches elektrische Energie leiten kann. Dabei wird bei angeschlossenen Haushalten auf die Schalter zugegriffen, welche es dem Energieversorger ermöglichen, Geräte hinzu- oder abzuschalten. Es ist offensichtlich, dass dabei sichergestellt sein muss, dass eine fremdbestimmte Schaltung unterbleibt.

Das nachfolgend beschriebene erfinderische Energiemanagementsystem enthält ein eigenes Schaltmodul, welches sowohl passiv als auch aktiv geschaltet werden kann, und stets vom Nutzer verwaltet wird. Schaltungen welche nicht vom Nutzer aktiv getätigt werden, können vom Nutzer selbst erstellt werden, wodurch der Nutzer weiterhin über seine Entnahmestelle bestimmen darf.

Der Status der Informationsverarbeitung ist für den Teilnehmer eines Teilnetzes stets einsehbar, u.a. in welchem Umfang Strom von z.B. den Nachbarn in das Netz eingespeist wird, damit diese die Möglichkeit bekommen, ihr Entnahmeverhalten entsprechend anzupassen.

Der Inhalt der Informationen wird Dritten vorenthalten, da die Daten in jeder einzelnen Entnahmevorrichtung, welche auch aus mehreren Vorrichtung bestehen kann, direkt analysiert werden. Die Analyse erfolgt dahingehend, dass der exakte Verbrauch der Entnahmevorrichtung ab dem Zeitpunkt der Schaltung ermittelt wird. Diese Informationen werden auf dem Managementmodul lokal gespeichert. Diese Daten sind also nur lokal bekannt. Die Daten werden regelmäßig aktualisiert, so dass beispielsweise der Austausch einer Entnahmevorrichtung direkt nach Inbetriebnahme erfasst wird, ohne dass ein manueller Eingriff notwendig ist.

Aufgrund dieser Daten, kann im Falle einer Schaltung die dazugehörige Entnahmemenge präzise angefordert werden. Die Anfrage nach einem Bedarf erfolgt pseudonymisiert. Aufgrund des Pseudonyms kann die Anfrage einer Region zugeordnet werden und geht in der Summe aller Anfragen auf. Damit ist die Bedarfsmeldung zum Zeitpunkt der Verarbeitung nicht mehr einer Entnahmestelle zuzuordnen. Eine Veröffentlichung der Daten erfolgt nicht. Es können aus dem anonymen Datenpool Lastgangprofile erstellt werden ohne dass dies Rückschlüsse auf das Verhalten eines einzelnen Nutzers zulässt. In diesem Zusammenhang können auch die Nachteile eines Bilanzkreismanagements beseitigt werden, wobei eine Unterversorgung dem Energieversorger mitgeteilt wird, damit dieser Regelenergie besorgt und damit eine überschüssige Einspeisemenge dem Energieversorger bereitgestellt wird. Dieses derzeit genutzte Verfahren ist sehr unvorteilhaft, da Regelenergie sehr teuer ist und überschüssige Energie in Ermangelung weiterer Möglichkeiten nur zum höheren aktuellen Marktpreis abgesetzt werden kann. Somit kann das derzeitige Verfahren unter entsprechenden Umständen zu erheblichen Mehrkosten führen.

Das erfinderische Energiemanagementsystem-Verfahren beseitigt diesen Mangel, da überschüssige Energie einer Region auch als Regelenergie an eine andere Region weitergegeben werden kann und es idealerweise pro Region mindestens einen grundlastfähigen Teilnehmer gibt, welcher die Unterversorgung auch ohne Eingreifen eines nicht am System beteiligten ausgleichen kann.

Nachfolgend werden weitere Ausgestaltungsmöglichkeiten der Erfindung ausgeführt, die die Allgemeinheit der Erfindung nicht beschränken sollen:

Die Erfindung kann ein Netzwerk bilden, dessen Aufgabe es ist, die Einspeisung sowie die Entnahme von elektrischer Energie ausgeglichen und ortsgebunden zu organisieren. Insbesondere soll elektrische Energie, welche aus erneuerbaren Energien gewonnen wird, einer Entnahmestelle zugeführt werden, welche möglichst nahe zum Erzeuger liegt. Auf diese Weise kann die Nutzung von überliegenden Verteilernetzen vermieden werden, was weiter die Aufgabe hat, eine verbesserte Netzstabilität bereit zu stellen.

Die Energiemanagementsystem-Vorrichtung ist dabei aufgrund Ihres modularen Aufbaus besonders flexibel einsetzbar.

Im Folgenden werden die Module der erfinderischen Energiemanagementsystem-Vorrichtung wie folgt definiert: Das Managementmodul besteht aus mehreren Signalempfängern, Signalgebern, sowie mehreren Interfaces, über welche sich das jeweilige Managementmodul ansteuern und verwalten lässt.

Das Schaltmodul enthält Elemente, welche zur Schaltung elektrischer Lasten geeignet sind und kann Elemente zur Steuerung der Schaltelemente enthalten.

Das Zählermodul besteht aus einem Stromzähler, welcher geeignet ist, den Fluss von elektrischer Energie zu erfassen und diesen in Form von Daten bereitzustellen. Diese Daten werden über eine geeignete Schnittstelle bereitgestellt und können von dem Managementmodul ausgelesen werden. Das Zählermodul entspricht dabei den Anforderungen für eine rechtssichere Erfassung und Abrechnung von elektrischen Energieentnahmen (Eichung, MID).

Das Adaptionsmodul ist für sich selbst modular aufgebaut. Es kann nach Bedarf mehrere aktive und passive Bauteile enthalten. Es kann mit Hilfe eines Analog-Digital Wandlers analoge Signale für das Managementmodul lesbar/verarbeitbar machen, umgekehrt kann es digitale in analoge Signale wandeln, falls diese zum Ansteuern eines externen Interfaces notwendig sind.

Über das Adaptionsmodul wird, sofern nötig, eine Anpassung der ein- und ausgehenden Datensignale vorgenommen. Dies geschieht meistens über die Anpassung des Spannungs- oder Strompegels, bzw. über deren Peak-to-Peak Abstände. Somit ist sichergestellt, dass die Signale gemäß der Übertragungsart und Formate korrekt als Bits empfangen und gesendet werden.

Das Managementmodul ist mit standardisiertem/normierten Schnittstellen an sämtliche vorhandenen Signalgebern und Signalempfängern adaptierbar, wodurch es problemlos in sämtliche bereits vorhandenen Vorrichtungen eingebunden werden kann.

Weiter kann das Adaptionsmodul individualisiert schnell und kostengünstig den jeweiligen Gegebenheiten angepasst werden. Somit kann mit Hilfe des Managementmoduls jedes Gerät ausgelesen und gesteuert werden, welches über eine derartige Schnittstelle verfügt. Es ist somit nicht auf die reine Verwendung mit einer Messstelle für elektrische Energie ausgelegt, sondern kann auch für die Erhebung von Verbrauchsdaten anderer Messstellen wie z.B. für Wärme, Wasser oder Gas verwendet werden.

Durch den modularen Aufbau sind folgende Kombinationen möglich:

- Managementmodul+Erfassungsmodul
- Managementmodul+Erfassungsmodul+Schaltmodul
- Managementmodul+Adaptionsmodul
- Managementmodul+Erfassungsmodul+Schaltmodul+Adaptionsmodul
- Managementmodul+Erfassungsmodul+Adaptionsmodul
- Managementmodul

Somit ist der Einsatz in dem Großteil der derzeit bekannten Nutzeinheiten möglich.

Die Entnahmestelle ist wie folgt beschrieben. Das Erfassungsmodul ermittelt den laufenden Verbrauch an elektrischer Energie seitens des Verbrauchers an der Entnahmestelle. Die Erfassung erfolgt kleinschrittig und in Echtzeit. Die ermittelten Verbrauchsdaten werden lokal auf dem Managementmodul gespeichert. Gleichzeitig wird der Bedarfszeitpunkt festgehalten. Das Managementmodul wertet aus, welcher durchschnittliche Lastgang auf ein Schaltverhalten des Schaltmoduls folgt. Somit ist gewährleistet, dass eine Änderung der Entnahmemenge einer Schaltung sofort registriert wird und die Bedarfsmeldung entsprechend angepasst werden kann.

Die Vorrichtung kann die Bedarfsdaten der Entnahmestelle an einen Server in der Ferne senden, sofern die Bedarfsdeckung nicht dauerhaft lokal gewährleistet werden kann. Die Übermittlung der Bedarfsdaten erfolgt vor der Schaltung des Lastganges. Somit kann ein Bedarf sehr präzise angefordert werden, bevor er entsteht. Der Vorgang der Bedarfsanmeldung und die darauffolgende Schaltung erfolgen in einem Zeitrahmen, der für den Nutzer nicht wahrnehmbar ist. Für den Nutzer stellt es sich so dar, dass die entsprechende Schaltung direkt nach erfolgter Eingabe ausgeführt wird. Sollte eine lokale Einspeisung, beispielsweise durch eine Photovoltaik Anlage stattfinden, so wird der Bedarf erst mit der lokalen Einspeisungsmenge verrechnet und nur der Mehrbedarf an den Server gesendet. Wenn mehr elektrische Energie eingespeist wird, als von der Entnahmestelle, oder beispielsweise in einem Mehrfamilienhaus mit einer Photovoltaikanlage, die Summe aller Entnahmen die Menge der elektrischen Energie aus der Photovoltaikanlage nicht überschreitet, wird der Überschuss an den Server gesendet. Somit ist die Entnahmestelle im ständigen Kontakt mit dem Server. Es wird durchgehend in quasi Echtzeit gesendet, wieviel Bedarf besteht oder wieviel Überschuss vorhanden ist.

Eine Verrechnung von Einspeisung und Entnahmen kann entweder auf Grundlage der erhobenen Daten erfolgen, oder per Differenzmessung, wenn beispielsweise bei einem 3-Phasen Anschluss eine Phase ausschließlich für die Einspeisung der über die Anlage gewonnenen Energie verwendet wird.

Ein Nutzer kann sich über ein geeignetes Gerät, z.B. ein Handy, jederzeit eine Übersicht darüber verschaffen, wieviel elektrische Energie in seiner Nutzeinheit in dem dazugehörigen Zeitraum verbraucht wurde. Diese Informationen erhält er lokal von dem Managementmodul. Ebenso können die einzelnen Entnahmen nach Schaltungen eingesehen werden. Sämtliche nutzerbezogenen und/oder objektbezogenen Daten können dabei in Reinform nur lokal eingesehen werden.

Aufgrund des modularen Aufbaus ist es ebenfalls möglich, dass beispielsweise in einem Mehrfamilienhaus beliebig viele Nutzeinheiten mit dem System ausgestattet werden. Es ist nicht zwangsweise notwendig alle Nutzeinheiten auszustatten, da jede Nutzeinheit eine Verbrauchseinheit für sich bildet. Innerhalb einer energieintensiven Entnahmestelle mit direkter Anbindung an die Mittelspannungsebene oder höher, kann das Schaltmodul verwendet werden, um Schaltungen ganzer 3-Phasen Netze innerhalb der Entnahmestelle zu realisieren. Ebenso kann das Schaltmodul verwendet werden, um eine Entnahmestelle komplett vom Niederspannungsnetz zu trennen.

Der Einspeiser ist wie folgt beschrieben. Das Managementmodul erhebt die eingespeiste elektrische Energie in Echtzeit. Sofern notwendig und vorhanden, werden gleichzeitig noch weitere relevante Einflussfaktoren erhoben. Die Einflussfaktoren sowie die Einspeisung werden auf dem Managementmodul gespeichert. Gleichzeitig wird der Zeitpunkt festgehalten, zu welchem die Einspeisemenge und die Einflussfaktoren entstanden sind. Somit kann das Managementmodul, je länger es in Betrieb ist, die Änderung der Einspeisung anhand der Einflussfaktoren prognostizieren.

Die Vorrichtung sendet die Einspeisungsdaten an einen Server in der Ferne.

Der Betreiber der Anlage kann sich jederzeit einsehen, wieviel elektrische Energie in welchem Zeitraum eingespeist wurde. Je nach Betrieb der Vorrichtung sind die Betriebsdaten sowie die beeinflussenden Umweltzustände für den Anlagenbetreiber ebenfalls einsehbar. Sollte die einspeisende Anlage ebenfalls Wärme in ein dafür vorgesehenes Netz einspeisen, so kann die eingespeiste Wärmemenge ebenfalls erfasst werden. Bei Bedarf kann das Managementmodul verwendet werden, um Steuersignale an die einspeisende Anlage zu senden.

Der Server ist wie folgt beschrieben. Der Server empfängt die zuführenden und abgehenden Lastgänge von Einspeiser und Entnahmestelle. Der Server erkennt aufgrund des Senders von welcher Einheit die Daten kommen. Es können Verbrauch und Einspeisung hierarchisch nach Ihrer regionalen Herkunft zusammengeführt werden.

Die Vorrichtung schafft somit die Voraussetzung für die direkte und automatisierte Vermarktung von elektrischer Energie von einer einspeisenden Anlage an den Endverbraucher. Die einspeisende Anlage meldet, wieviel elektrische Energie bereitgestellt wird, der Verbraucher meldet, wieviel elektrische Energie benötigt wird. Sollte in einer regionalen Zuordnungseinheit weniger elektrische Energie eingespeist werden, als benötigt wird, so wird die Einspeisemenge der regionalen Zuordnungseinheit hinzugezogen, welche sich am nächsten zur Entnahmestelle befindet.

Dabei erfolgt die Erfassung der Einspeisungen und Entnahmen immer unter den Gerätepseudonymen und wird anonymisiert verarbeitet.

Der Server kann flexibel definiert werden und sich entweder in der Ferne befinden und dort auch dezentrale Einheiten zusammenfassen, es besteht aber auch die Möglichkeit ein Managementmodul als lokalen Server zu nutzen, welcher die Lastgänge der näheren Umgebung erfasst und diese dann erst, sofern notwendig, gebündelt einem fernen Server übergibt.

Somit ist auch eine lokale Vernetzung mehrerer Entnahmestellen in gebündelten Entnahmeclustern möglich, welche bei geeigneter Verkabelung und einer einspeisenden Anlage vor Ort mit geeigneter Leistung ohne ein Verteilernetz auskommen.

Des Weiteren kann der Server als Vermittlungsstelle für Steuersignale und Zustandsinformationen verwendet werden.

Aufgrund der im Allgemeinen dynamischen Vergabe von Adressen an Endgeräte, welche per Übertragungsmedium in ein Datennetz, z.B. Internet, eingebunden sind, ist eine permanente Direktverbindung zwischen zwei Geräten, welche verschiedene Anbindungen verwenden, nicht ohne weiteres möglich. Der Server verfügt über eine statische Adresse und kann jederzeit unter dieser von einem Gerät mit dynamischer Adresse erreicht werden. Es kann nun serverseitig der dynamischen Adresse ein Endgerät, z.B. durch eine Gerätekennung, zugewiesen werden. Durch die hinterlegten Daten, welches Gerät mit welchem kommunizieren soll, können so auch Geräte mit einer dynamischen Adresse miteinander verbunden werden.

Die parametrisierte Zuschaltung/Abschaltung von Lasten ist wie folgt beschrieben.

Das Schaltmodul wird direkt zwischen die Entnahmeleitung und der dazugehörigen Sicherung installiert. Somit befindet es sich hinter dem Hauptschalter des Sicherungskastens und hinter der Sicherung der Entnahmeleitung. Das Schaltmodul verfügt zudem über eine eigene Sicherung. Die Ausgangsstellung des Schaltmoduls nimmt keinen direkten Einfluss auf die Verfügbarkeit der Unterteilung der Hauptphasen. Somit bleibt im Falle eines Ausfalls des Schaltmoduls die reguläre Versorgung der einzelnen Stromkreise erhalten.

Die Schaltung der einzelnen Stromkreise erfolgt über technisch geeignete Bauteile, z.B. Unterbrechungsrelais, Umschaltrelais, und ist individuell den Gegebenheiten des Montageorts anpassbar. Eine Schaltung kann dabei manuell durch den Nutzer ausgelöst werden oder automatisiert durch ein festgelegtes Ereignis.

Der Nutzer kann die Schaltungen manuell über ein dafür geeignetes Gerät auslösen, z.B. ein Smartphone, Tablet, PC, Touch-Display oder dergleichen.

Die manuellen Schaltungen sind ebenfalls individuell parametrisierbar. Somit ist es dem Nutzer möglich auch mehrere Schaltungen gleichzeitig zu kombinieren. Wenn der Nutzer beispielsweise am späten Abend vom Wohnzimmer in die Küche gehen will und dabei den Hausflur durchqueren muss, kann eine Schaltfolge generiert werden, welche sowohl das Licht im Flur, als auch in der Küche einschaltet.

Eine automatisierte Schaltung kann entweder über einen externen Server, oder über ein lokales Ereignis herbeigeführt werden. Wenn beispielsweise mehr elektrische Energie in das Verteilernetz eingespeist wird, als entnommen wird, so kann eine Schaltung über den Server sofort nach Eintritt der überschüssigen Einspeisung erfolgen, und diese damit abschwächen bzw. ausgleichen.

Ebenso ist eine Schaltung nach speziellen Tarifen regelbar, es kann also preisabhängig geschaltet werden.

Diese Schaltungen sind besonders für Geräte mit einem hohen Stromverbrauch interessant. So kann beispielsweise die Pumpe eines Klärwerks schneller pumpen, wenn es einen Energieüberschuss gibt und nach Wegfall des Überschusses wieder in den Normalzustand zurückschalten. Ebenso ist dies eine Möglichkeit besonders effektiv elektrische Energie in Wärme zu wandeln, z.B. mit Hilfe eines Tauchsieders. Große Kühlanlagen könnten ebenfalls sehr energieintensiv herunterkühlen. Mehrere kleinere Verbrauchsgeräte ergeben in der Summe ebenfalls einen hohen Verbrauch, welche zur Stabilisation des Netzes beitragen können.

Eine besonders relevante Schaltung für eine erhöhte Entnahmelast, ist die Nutzung des Schaltmodul als Initiator für ein komplettes "3 Phasen Netz" innerhalb einer Industrie oder Gewerbeeinheit. Bei einer Entnahmestelle dieser Art existiert meist eine Anbindung an ein übergelagertes Stromnetz, beispielsweise das Hochspannungsnetz oder das Mittelspannungsnetz. Eine Transformation auf die notwendige Betriebsspannung findet vor Ort statt. Somit sind diese Entnahmestellen befähigt vor Ort eine höhere Spannungsebene in mehrere "3 Phasen Netze" zu unterteilen. Eine lokal erstelltes "3 Phasen Netz", in einem Niederspannungsnetz, kann über ein geeignetes Bauteil, z.B. ein Schütz, hinzu oder abgeschaltet werden. Das Schalten dieser Bauteile erfordert dabei eine wesentlich höhere Spannung als etwa das Schalten eines Entnahmegerätes. In diesem Fall kann das Schaltmodul für das Hinzuschalten mehrerer Niederspannungsnetze genutzt werden, wobei das Schaltmodul in diesem Fall die Steuerspannung schaltet, welche benötigt wird, um die einzelnen Niederspannungsnetze zu schalten. Innerhalb der geschalteten Niederspannungsnetze können dann weitere Schaltmodule genutzt werden, um die einzelnen Lasten individuell zu parametrisieren. Dabei ist das Netzwerk beliebig skalierbar.

Eine weitere Variante für die lokale Schaltung ist beispielsweise eine mit Sensoren ausgestattete Nutzeinheit. Ein Sensor registriert, ob sich eine Person in einem Raum befindet, diesen betritt oder verlässt und schaltet dann z.B. das Licht an oder aus. Auf jede Schaltung erfolgt eine Validierung der Schaltung in Form eines Bestätigungssignals. Sollte das Bestätigungssignal ausbleiben oder fehlerhaft sein, so wird das Schaltsignal ein weiteres Mal gesendet. Sollte mehrere Schaltsignale fehlerhaft validiert werden, so wird dies einem Server in der Ferne gemeldet.

Die Unterversorgung/Regelstrom ist wie folgt beschrieben. Aufgrund von schwankenden Umweltzuständen, z.B. Windstille oder Wolken am Himmel welche die Sonne verdecken, kann es zu Schwankungen der Einspeisungsmenge kommen. Somit sind beispielsweise Windenergie- und Photovoltaikanlagen stets durch die Umweltzustände beeinflusst und die eingespeiste Menge an elektrischer Energie ist stets schwankend. Es kann vorkommen, dass trotz regulierender Schaltungen eine Unterversorgung auftritt.

Für diesen Fall kann über das Managementmodul eine Zuschaltung von Lasten erfolgen. Es gibt Anlagen welche im Allgemeinen als Grundlastfähig bezeichnet werden. Diese können unabhängig der Umweltzustände konstante Mengen an elektrischer Energie einspeisen, z.B. Anlagen welche elektrische Energie aus Biomasse oder Wasserkraft gewinnen. Das aus der Biomasse gewonnene Gas kann beispielsweise verlustfrei gespeichert werden und das Speichermedium unterliegt keinem so hohen Verschleiß wie etwa eine Batterie. Hinzu kommt, dass eine Biogasanlage sehr schnell hochgefahren werden kann. Durch die Verknüpfung mit derartigen Anlagen können Unterversorgungen also sehr schnell ausgeglichen werden.

Somit stellen die erfinderische Energiemanagementsystem-Vorrichtung und das Energiemanagementsystem-Verfahren ein System bereit, welches es ermöglicht Einspeisungen und Entnahmen zu bilanzieren und diese auszugleichen. Es sind also Bilanzkreise möglich, welche hinsichtlich Einspeisung und Entnahme stets ausgeglichen sind und sich eigenständig regulieren.

Das Einspeisemanagement ist wie folgt beschrieben. Im Falle einer Netzüberlastung kann es vorkommen, dass beispielsweise Windenergieanlagen abgeschaltet werden, um das Netz wieder zu stabilisieren. Dieser Abschaltung kann entgegengewirkt werden, indem beispielsweise ein Broadcast an alle Entnahmestellen der betroffenen Region gesendet wird, welcher dazu führt, dass parallel mehrere Schaltungen zur Entnahme getätigt werden.

Durch die bekannten Lastsprünge der Schaltungen ist jederzeit bekannt, welches Maximum an Entnahmelasten in welcher Region verfügbar ist. Dem jeweiligen Netzbetreiber kann zudem Zeitpunkt, in welchem er die Abschaltung einer einspeisenden Anlage in Erwägung zieht, dabei über eine geeignete Schnittstelle eine Entnahmelast mitgeteilt werden, welche sofort geschaltet werden kann.

Die Montage der erfinderischen Energiemanagementsystem-Vorrichtung in einer Entnahmestelle erfolgt umhüllt von hitzebeständigem und nichtleitendem Material. Der Montageort ist neben dem Sicherungskasten anzusetzen. Die Montage kann Auf- und Unterputz erfolgen. Für die Anbringung der Vorrichtung werden Schrauben und Dübel benötigt. Es ist vor Montagebeginn zu prüfen ob sich unter dem Montagepunkt Leitungen befinden. Die Verbindungen zwischen Schaltmodul, Sicherung und den unterteilten Phasen wird z.B. über ein handelsübliches Kupferkabel der Stärke 1,5 mm$^2$ hergestellt. Je nach Montageart und Montageort werden diese Leitungen in einem Kabelkanal von der Außenwelt abgeschirmt. Für die Befestigung sind sowohl an den Schaltelementen, als auch an den Sicherungen klemmen vorhanden, so dass für die Befestigung ein Schraubenzieher ausreichend ist. Nach erfolgter Installation ist es möglich, die Vorrichtung von außen gefahrlos zu berühren.

Das Schaltmodul wird so verkabelt, dass nach erfolgter Installation ein regulärer Betrieb der Nutzeinheit gewährleistet ist. Somit kann beispielsweise das Licht für einen Raum weiterhin über den Lichtschalter gesteuert werden. Durch das Verlegen eines geeigneten Kabels können nebeneinanderliegende Entnahmestellen verbunden werden, somit ist die Inanspruchnahme des Verteilernetzes nicht mehr notwendig.

Um eine Verbindung mit einem entfernten Server herzustellen, kann ein handelsüblicher Router verwendet werden. Die Verbindung zwischen Router und Managementmodul kann kabelgebunden, z.B. über LAN, oder kabellos, z.B. über WLAN erfolgen. Die Verbindung zu einem anderen Gateway kann ebenfalls auf diese Weise realisiert werden.

Die Montage beim Einspeiser erfolgt in dem Schaltschrank/-kasten der einspeisenden Anlage. Es werden die vorhandenen Schnittstellen verwendet. Jede einspeisende Anlage verfügt über mindestens ein geeignetes Modul, welches erfasst, wieviel elektrische Energie von der Anlage eingespeist werden. Dies ist in der Regel zu Abrechnungszwecken unerlässlich. Mitunter können mehrere Schnittstellen vorhanden sein, welche einen Zugriff auf die Betriebsparameter sowie die beeinflussenden Umweltzustände ermöglicht. Diese können nach Bedarf adaptiert werden. Es besteht die Möglichkeit zur Adaption sämtlicher Schnittstellen. Hierbei spielt es keine Rolle, ob es sich um eine digitale oder analoge Schnittstelle handelt, ob Spannungssignale oder Stromsignale verwendet werden. In einigen Spezialfällen kann es sein, dass die Signalparameter angepasst werden müssen. Dies geschieht durch das Adaptionsmodul. Es kann vorgeschlagen werden, zusätzliche Messgeräte mit Schnittstelle, oder ein Gateway zur Verbindung mit einem fernen Server zu installieren.

Im Folgenden werden beispielhaft Verwendungen und Einsatzmöglichkeiten für die erfinderische Energiemanagementsystem-Vorrichtung und das Energiemanagementsystem-Verfahren beschrieben, ohne die Erfindung darauf zu beschränken. Die Beispiele sind exemplarisch zu sehen und sollen die Erfindung nicht in ihrer Allgemeinheit beschränken.

Beispiel 1:

Für einem Einsatz in einer Immobilie mit einer Nutzeinheit und eigener Vorrichtung zur Einspeisung von elektrischer Energie, z.B. einem Einfamilienhaus mit Photovoltaik-Anlage.

Das Managementmodul wird mit der Messstelle der einspeisenden Anlage verbunden und über WLAN mit einem Gateway, z.B. einem Router verbunden. Falls die Messstelle über keine Datenschnittstelle verfügt, wird zusätzlich ein Erfassungsmodul installiert. Sollte kein Gateway vorhanden sein wird. dieses ebenfalls in handelsüblicher Ausführung installiert. Die weitere Installation der Vorrichtung erfolgt wie bereits beschrieben.

Beispiel 2:

Für einen Einsatz in einem Mehrfamilienhaus in welchem nicht alle Nutzer eine Vorrichtung haben/haben wollen. Es erfolgt eine Installation der Vorrichtung, wie beschrieben, in allen Nutzeinheiten die vorgesehen sind. Es kann auch nur eine einzelne Nutzeinheit ausgestattet werden.

Beispiel 3:

Für einen Einsatz in einem Mehrfamilienhaus, in welchem keine Nutzeinheit über einen Router verfügt. Es erfolgt eine Installation der Vorrichtung, wie beschrieben, in allen Nutzeinheiten, die vorgesehen sind. Zusätzlich wird ein zentrales Gateway installiert, welches von allen Vorrichtungen genutzt wird. Jedes Managementmodul kann hierbei als Netzwerkbrücke für ein anderes Managementmodul verwendet werden, falls die Entfernung zum Gateway keine direkte Verbindung zulässt.

Der beispielhafte Ablauf für den Einsatz der erfinderischen Energiemanagementsystem-Vorrichtung und des Energiemanagementsystem-Verfahren kann folgenden Schritte umfassen: Erste Schaltanweisung erhält das Schaltmodul von dem Managementmodul. Die Steuersignale des Managementmoduls können nach Bedarf einem benötigten Signalmuster angepasst werden, dies kann auch über ein Adaptermodul angepasst werden. Das Managementmodul erhält Eingaben vom Nutzer der Entnahmestelle. Die einzelnen Module der Entnahmestelle werden in Betrieb genommen. Das Managementmodul meldet sich beim Server an und wird einmalig gemäß geographischem Standort integriert. Die Anmeldung folgt unter einer in die Hardware des Managementmoduls integrierten, nicht änderbaren und weltweit eindeutigen Gerätenummer. Die Inbetriebnahme des Schaltmoduls erfolgt im offenen Zustand. Die Entnahme von elektrischer Energie wird von dem Erfassungsmodul aufgenommen und zum Zeitpunkt der Entnahme an das Managementmodul gesendet. Das Managementmodul meldet die Entnahmemenge an den Server und speichert die Entnahmemenge mit dem Entnahmezeitpunkt sowie dem Zustand des Schaltmoduls auf einer eigenen lokalen Speichereinheit. Jede Schaltung des Schaltmoduls wird vom Managementmodul erfasst und der aus der Schaltung resultierende zu- oder abnehmende Lastgang wird in einer Art und Weise registriert, dass jedem Schaltzustand ein Lastgangprofil zugeordnet werden kann. Aufgrund der lokalen Daten werden Erfahrungswerte gebildet. Aufgrund des lokalen Lastgangprofils kann ein entsprechender Bedarf an den Server gesendet werden, bevor die Schaltung erfolgt. Das Schaltmodul sendet nach jeder Schaltanweisung eine Rückmeldung über den aktuellen Schaltzustand. Der Zustand kann ebenfalls separat abgefragt werden. Über diesen Mechanismus kann kontrolliert werden, ob eine Schaltanweisung auch ausgeführt wurde und gegebenenfalls wiederholt werden muss. Der Schaltzustand des Schaltmodul wird nach jeder Änderung durch das Managementmodul an den Server übermittelt. Das Managementmodul überträgt Daten an den Server unter der Verwendung der eindeutigen Gerätenummer, die Übertragenen Daten sind nur diesem Pseudonym der Entnahmestelle zuzuordnen.

Die einzelnen Module des Einspeisers werden in Betrieb genommen. Das Managementmodul meldet sich beim Server an und wird einmalig gemäß geographischem Standort integriert. Die Anmeldung erfolgt unter einer in die Hardware des Managementmoduls integrierten, nicht änderbaren und weltweit eindeutigen Gerätenummer. Das Managementmodul ist mit einer Datenschnittstelle der Anlage verbunden, welche mindestens die laufenden Einspeisungsdaten ausgibt. Das Managementmodul meldet die Einspeisemenge an den Server und speichert die Einspeisemenge mit dem dazugehörigen Zeitpunkt sowie, soweit vorhanden, die dazugehörigen Umweltzustände der Anlage auf einer eigenen lokalen Speichereinheit.

Der Server wird gestartet. Der Server erhält mindestens die Einspeisungsmenge von einer Anlage und die Entnahmedaten einer Entnahmestelle. Die Erfassung der Einspeisungs- und Entnahmemenge erfolgt unter Verwendung der Gerätenummer des Managementmoduls. Zur weiteren Verarbeitung und zur weiteren Anonymisierung werden diese zu Ihrem geographischen Standort aufsummiert. Ein geographischer Standort kann sich innerhalb eines übergeordneten geographischen Standortes befinden. Die Einspeisungs- und Entnahmemenge wird hierarchisch nach Ihrem geographischen Standort miteinander saldiert. Die Saldierung erfolgt in einer Art und Weise, das stets Einspeiser und Verbraucher zusammengeführt werden, die sich geographisch am nächsten sind und sich idealerweise in der gleichen Ebene des Verteilernetzes befinden. Der Server speichert das Ergebnis der Saldierung mit dem dazugehörigen Zeitpunkt mit Bezug auf Einspeisungsstelle und Entnahmestelle im Abrechnungsserver. Der Server speichert die Differenz der Saldierung sowie die Schaltzustände der Schaltmodule zum dazugehörigen Zeitpunkt im Managementserver und kann Schaltsignale an das Schaltmodul der Entnahmestelle senden. Der Server wertet die Daten aus und bildet so Erfahrungswerte im Datenbankserver.

Die lokal auf dem Managementmodul gespeicherten Erfahrungsdaten eines Einspeisers oder einer Entnahmestelle sind stets ein Abbild der Realität. Aus diesen werden Werteverknüpfungen abgeleitet, welche einen Zustand der Realität abbilden. Jedes Managementmodul erstellt einen eigenen Erfahrungsgegenstand, welcher im laufenden Betrieb ständig aktualisiert wird. Dieser Erfahrungsdaten werden zentral und ohne direkten Bezug zu der realen Vorrichtung allgemein zusammengefasst. Somit entsteht ein stetig anwachsender Erfahrungsgegenstand über Zustände von Einspeisern und Entnahmestellen. Aufgrund dieser Daten kann über einzelne oder mehrere Werte ein direkter Bezug zu einer Werteverknüpfung hergestellt werden. Somit kann auch anhand einer oder mehrerer Werte aufgrund der vorhandenen Verknüpfungen ermittelt werden, welche Referenzzustände zu einem bestimmten Wert möglich sind.

Das Managementmodul wird innerhalb einer Einspeisungsanlage für die Überwachung und Steuerung des technischen Betriebs genutzt. Zusätzlich zu den Einspeisungsdaten werden auch sämtliche Betriebsdaten der Anlage erhoben und dem Betreiber bereitgestellt. Eine Regelung grundlastfähiger Anlagen kann stattfinden.

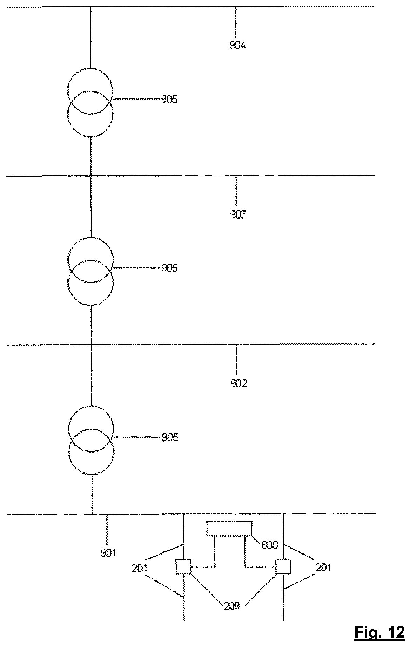

Die Vorrichtung kann beispielsweise innerhalb einer Gewerbe-/Industrieanlage zur Schaltung ganzer Versorgungsnetze verwendet werden (vgl. Figur 12). Innerhalb dieser Versorgungsnetze können weitere Vorrichtungen regulierend wirken.

Bei einer bereits vorhandenen Steuerschnittstelle können einzelne Maschinen/Anlagen auch direkt über das Managementmodul gesteuert werden, ohne dass ein Schaltmodul notwendig wird.

Es reicht ein Erfassungsmodul für mehrere Verbraucher, sofern alle über die gleiche Leitung gespeist werden. In einem Mehrfamilienhaus können auch nur einzelne Nutzeinheiten teilnehmen. Eine Erhebung der Daten von vorhandenen Geräten zur Erfassung anderer Verbrauchsarten wie z.B. Wärme und Wasser kann stattfinden, wenn entsprechende Geräte mit Datenschnittstelle vorhanden sind. Bei einer Vernetzung mehrerer Vorrichtungen innerhalb eines Hauses, wird nur eine Anbindung an das Internet benötigt. Bei mehreren Anbindungen an das Internet kann die Übertragung durch eine redundante Verbindung erfolgen, falls die primäre Anbindung ausfällt.

Es können dabei mehrere lokale Vorrichtungen zu einem Entnahmecluster physikalisch zusammengefasst werden. Dies ist z.B. auch für eine Vernetzung mehrerer WEA innerhalb eines Windpark, z.B. per Funk, zu einem Einspeisecluster möglich und gilt auch für eine Vernetzung mehrerer Einspeise- und Entnahmecluster auf lokaler Ebene.

Die erfindungsgemäße Energiemanagementsystem-Vorrichtung mit einem Sicherungskasten 200, einem Schaltmodul 300, einem Managementmodul 400 und einem Erfassungsmodul 500, die als eine erste Bauteilgruppe bevorzugt räumlich nahe miteinander durch Kabelverbindungen miteinander derart koppelbar sind, dass der Sicherungskasten 200, mit Sicherungen 203, mit einer Verteilerleitung 204 über das Erfassungsmodul 500 mit einem Hauptschalter 202 an einer Hauptphasenleitung 201 anschließbar sind und eine weitere Bauteilgruppe mit einem Router/Gateway 600, einen Server 1400 und eine Erneuerbare Energien Anlage 1200, wobei der Server 1400 jeweils über ein Übertragungsmedium in ein Datennetz 1300, z.B. Internet, mit dem Router/Gateway 600 und der Erneuerbare Energien Anlage 1200 in datentechnisch verbindbar sind.

Das erfindungsgemäße Energiemanagementsystem-Verfahren mit mindestens einer Entnahmestelle, einem Server und einem Einspeiser des Typs Erneuerbare Energien Anlage 1200, wobei die jeweilige Entnahmestelle ein Erfassungsmodul 500, ein Managementmodul 400, ein Schaltmodul 300 und zumindest ein Betriebsgerät und/oder eine Einspeisungsanlage aufweist, der jeweilige Server 1400 zumindest Instanzen des Typs Managementserver 1401, Datenbankserver 1402 und Abrechnungsserver 1403 aufweist, der jeweilige Einspeiser zumindest eine Erneuerbare Energien Anlage 1200 aufweist, wobei das jeweilige Schaltmodul 300 das jeweilige Betriebsgerät und/oder die jeweilige Einspeisungsanlage steuert, das jeweilige Erfassungsmodul 500 eine Inbetriebnahme des jeweiligen Schaltmoduls 300 und einen Status eines Energieflusses detektiert, parametrisiert und die Information an das jeweilige Managementmodul 400 sendet, das jeweilige Managementmodul 400 Schaltsignale an das jeweilige Schaltmodul 300 sendet und vom jeweiligen Schaltmodul 300 eine Rückmeldung über einen Schaltstatus erhält, in welchem Zustand es sich befindet, das jeweilige Managementmodul 400 Entnahmedaten und optional Informationen über den Schaltstatus an den jeweiligen Server sendet, der jeweilige Einspeiser 1200 eine Einspeisungsmenge und weitere Betriebsdaten als Einspeisungsdaten an das jeweilige Managementmodul 400 sendet, wobei das jeweilige Managementmodul 400 diese Daten an den jeweiligen Server 1400 sendet, der jeweilige Server 1400 die Einspeisungsdaten mit den Informationen über den Schaltzustand einer jeweiligen Entnahmestelle empfängt, der jeweilige Server 1400 die Einspeisungsdaten und weitere Betriebsdaten eines jeweiligen Einspeisers 1200 empfängt, die Instanz Datenbankserver 1402 jeden Datensatz vom jeweiligen Einspeiser 1200 und von der jeweiligen Entnahmestelle eindeutig einander zu ordnet, die Instanz Abrechnungsserver 1403 Einspeisungs- und Entnahmemengedaten nach definierten Kriterien zusammenführt, die Instanz Managementserver 1401 Schaltsignale an die jeweilige Entnahmestelle sendet.

Weitere Vorteile, Merkmale und Anwendungsmöglichkeiten der vorliegenden Erfindung ergeben sich aus der nachfolgenden Beschreibung in Zusammenhang mit den **Figuren.** Diese Figuren und Ausführungsbeispiele sollen die Erfindung lediglich erläutern und nicht in ihrer Allgemeinheit beschränken.

Es zeigen:

**Fig. 1**  eine Ausführung der erfindungsgemäßen Vorrichtung;

**Fig. 2**  ein Flussdiagramm für ein erfindungsgemäßes Verfahren;

**Fig. 3**  eine einfache Variante der Zuschaltung eines Lastgangs;

**Fig. 4**  eine einfache Variante der Abschaltung eines Lastgangs;

**Fig. 5**  eine einfache Variante der Umschaltung zwischen 2 Lastgängen;

**Fig. 6**  eine einfache Variante der Umschaltung zwischen 2 Lastgängen mit Unterbrechungsschaltung;

**Fig. 7**  eine beispielhafte Anwendung bei der Verknüpfung von zwei Mehrfamilienhäusern über ein Verteilernetz, bei dem ein Mehrfamilienhaus über eine Photovoltaikanlage verfügt;

**Fig. 8**  eine beispielhafte Anwendung für die Verknüpfung von einem Mehrfamilienhaus mit einer Biogasanlage;

**Fig. 9**  eine beispielhafte Anwendung für die Verknüpfung von einem Mehrfamilienhaus mit einer Wasserkraftanlage;

**Fig. 10**  eine Beispielhafte Anwendung für die Verknüpfung mit einer freistehenden Photovoltaikanlage, bei der die eingespeiste Energiemenge nach dem gleichen Verfahren wie in Fig. 7 erhoben wird;

**Fig. 11**  eine beispielhafte Anwendung für die Verknüpfung eines Mehrfamilienhauses mit einer Windenergieanlage;

**Fig. 12**  die verschiedenen Netzebenen mit der Einsatzmöglichkeit der Erfindung auf Netzebene;

**Fig. 13**  die Kommunikation zwischen mehreren Einspeisern und Entnahmestellen die sich nicht in räumlicher Nähe zueinander befinden;

**Fig. 14**  die Kommunikation zwischen mehreren Einspeisern und Entnahmestellen die sich in räumlicher Nähe zueinander befinden und

**Fig. 15**  die Kommunikation zwischen mehreren Einspeisern und Entnahmestellen die sich sowohl in räumlicher Nähe zueinander befinden, als auch nicht und nach Ihrem regionalen Standort zusammengefasst sind.

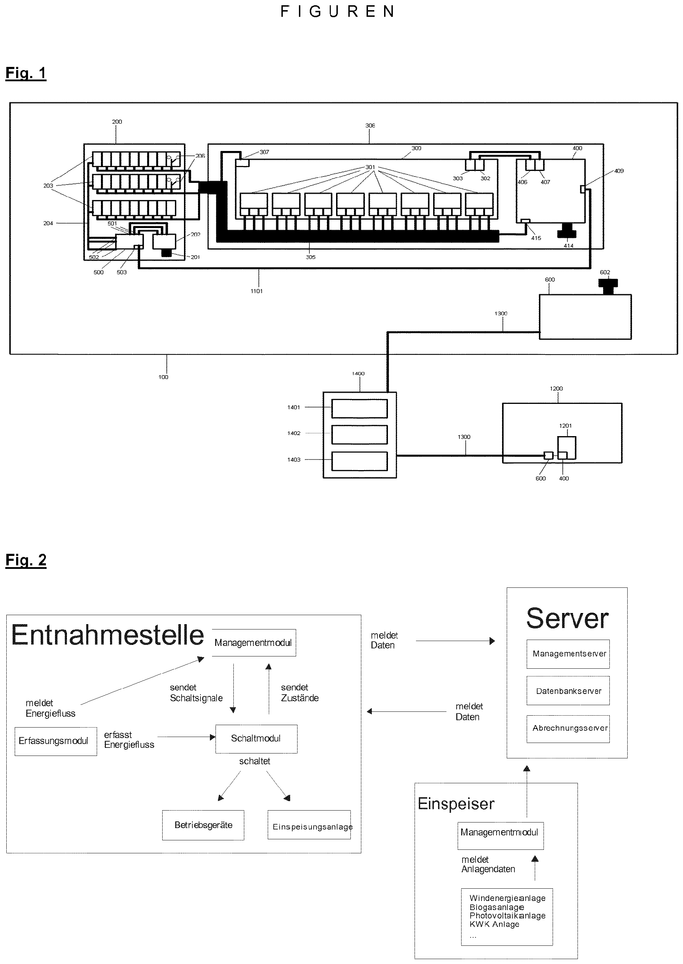

**Figur 1** zeigt eine Ausführung der erfindungsgemäßen Vorrichtung mit einem Sicherungskasten 200, einem Schaltmodul 300, einem Managementmodul 400 und einem Erfassungsmodul 500, die als eine erste Bauteilgruppe räumlich nahe miteinander durch Kabelverbindungen miteinander verbindbar/koppelbar sind.

Eine weitere räumlich getrennte Bauteilgruppe, die kabellos z.B. über WLAN 414, 602 mit der ersten Bauteilgruppe kommuniziert, nutzt ansonsten ein Übertragungsmedium in ein Datennetz (Internet) 1300 für die Kommunikation.

Die weitere Bauteilgruppe der erfindungsgemäßen Vorrichtung zeigt einen Router/Gateway 600, einen Server 1400 und eine Erneuerbare Energien Anlage 1200, wobei der Server 1400 jeweils über ein Übertragungsmedium in ein Datennetz (Internet) 1300 mit dem Router/Gateway 600 und der Erneuerbare Energien Anlage 1200 in Verbindung steht.

Der Sicherungskasten 200 zeigt drei Hutschienen mit Sicherungen 203, die mit einer Verteilerleitung 204 über das Erfassungsmodul 500 mit dem Hauptschalter 202 an der Hauptphasenleitung 201 angeschlossen sind. Zwei der Hutschienen mit Sicherungen 203 zeigen beispielhaft jeweils ein aufgesetztes Netzteil 206.

Das Erfassungsmodul 500 weist drei Eingang Phasen 501, die mit dem Hauptschalter 202 an der Hauptphasenleitung 201 angeschlossen sind und drei Ausgang Phasen 502, die über die Verteilerleitung 204 jeweils mit einer der drei Hutschienen mit Sicherungen 203 verbunden sind, auf. Weiter ist das Erfassungsmodul 500 mit einer Datenschnittstelle 503 ausgestattet, die über ein Kabel mit zwei isolierten Adern Kupfer 1101 mit dem DSI (Daten Schnittstelle Interface) 409 des Managementmoduls 400 kommuniziert.

Das Managementmodul 400 verfügt neben der WLAN 414 Schnittstelle weiter über eine Stromversorgung 415, die über einen Kabelkanal 305 mit einem der Netzteile 206 des Sicherungskastens 200 verbunden ist.

Über UART TX 406 und UART RX 407 ist das Managementmodul 400 mit dem Schaltmodul 300 und seinem seriellen Eingang 302 bzw. seriellen Ausgang 303 verbunden.

Das Schaltmodul 300 verfügt über eine Stromversorgung 307, die über den Kabelkanal 305 mit einem der Netzteile 206 des Sicherungskastens 200 verbunden ist. Der jeweilige Wechselkontakt-Schaltausgang (Relais) 301 ist mit dem Kabelkanal 305 verbunden. Das Schaltmodul 300 und das Managementmodul 400 sind von einer gemeinsamen Schutzhülle 306 umgeben.

**Figur 2** zeigt ein Flussdiagramm welches die Interaktion und Kommunikationswege zwischen mindestens einer Entnahmestelle und einem Einspeiser darstellt.

Die Inbetriebnahme des Schaltmoduls erfolgt im offenen Zustand.

Das Managementmodul sendet Schaltsignale an das Schaltmodul und erhält vom Schaltmodul eine Rückmeldung, in welchem Zustand es sich befindet. Das Erfassungsmodul erfasst die Entnahme an elektrischer Energie, insbesondere elektrische Energie, welche nach einer Schaltung des Schaltmoduls entnommen wird und sendet die Entnahmedaten an das Managementmodul.

Das Managementmodul sendet die Entnahmedaten und bei Bedarf Informationen über den Schaltzustand an einen Server.

Der Einspeiser meldet seine Einspeisungsmenge sowie nach Bedarf weitere Betriebsdaten an das Managementmodul. Das Managementmodul sendet diese Daten an einen Server.

Der Server empfängt die Entnahmedaten und gegebenenfalls die Informationen über den Schaltzustand einer Entnahmestelle. Der Server empfängt die Einspeisungsdaten und gegebenenfalls weitere Betriebsdaten eines Einspeisers. Über einen integrierten Datenbankserver kann jeder Datensatz vom Einspeiser und von der Entnahmestelle eindeutig zugeordnet werden. Über einen integrierten Abrechnungsserver können Einspeisungs- und Entnahmemenge bilanziert und miteinander nach definierten Kriterien zusammengeführt werden. Über einen integrierten Managementserver können Schaltsignale an eine oder mehrere Entnahmestellen gesendet werden.

Der in der Figur 2 gezeigte Server kann auch als Cloud-Instanz betrieben werden und muss damit auch nicht physikalisch als ein Hardware-Modul ausgeführt sein.

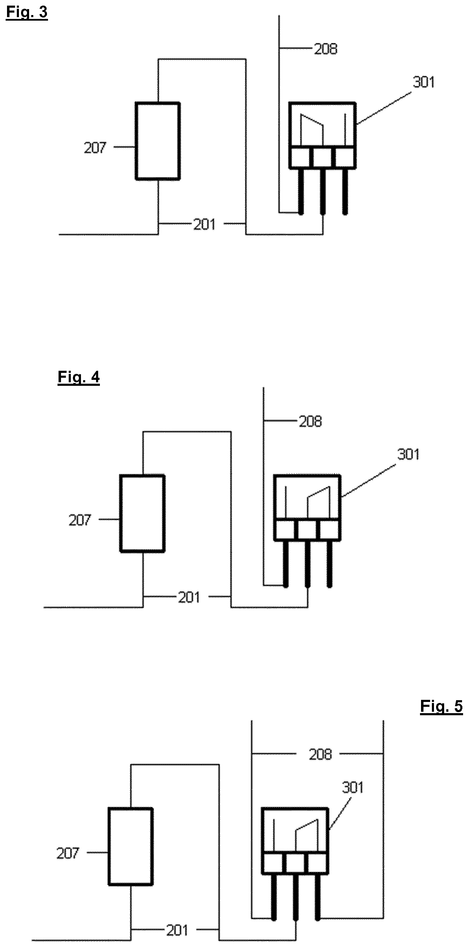

**Figur 3** zeigt eine erste Variante der Zuschaltung eines Lastgangs. Die Hauptphasenleitung 201 durchläuft die Sicherung 207 und mündet im beweglichen Glied des Wechselkontakt-Schaltausgangs (Relais) 301 welcher im ungeschalteten Zustand mit der Leitung zum Entnahmegerät 208 verbunden ist.

**Figur 4** zeigt eine weitere Variante der Abschaltung eines Lastgangs. Die Hauptphasenleitung 201 durchläuft die Sicherung 207 und mündet im beweglichen Glied des Wechselkontakt-Schaltausgangs (Relais) 301, welcher aufgrund der Schaltung des Wechselkontakt-Schaltausgangs (Relais) 301 nicht mit der Leitung zum Entnahmegerät 208 verbunden ist.

**Figur 5** zeigt eine weitere Variante der Umschaltung zwischen zwei Lastgängen. Die Hauptphasenleitung 201 durchläuft die Sicherung 207 und mündet im beweglichen Glied des Wechselkontakt-Schaltausgangs (Relais) 301, welches im ungeschalteten und geschalteten Zustand mit einer Leitung zu einem Entnahmegerät 208 verbunden ist.

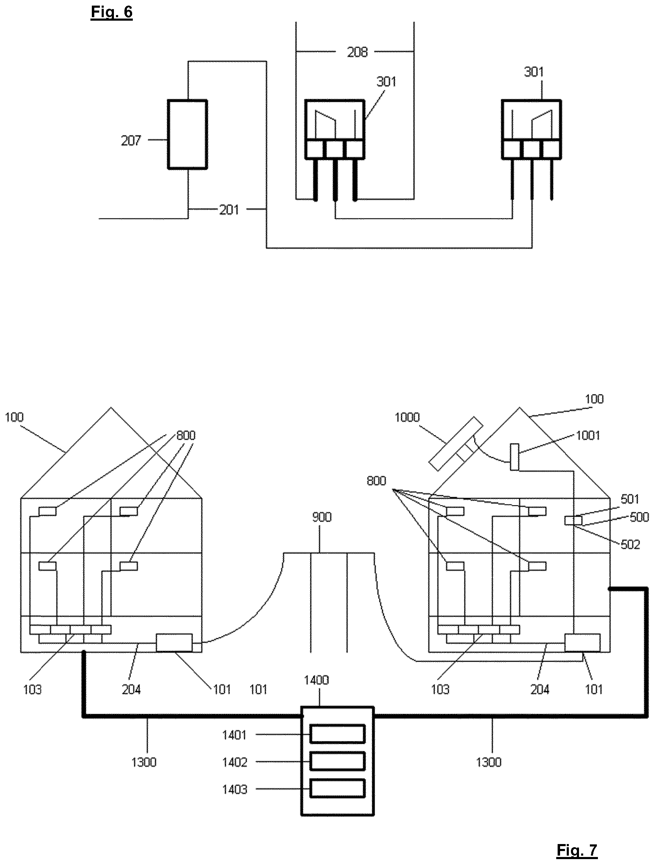

**Figur 6** zeigt eine weitere Variante der Umschaltung zwischen zwei Lastgängen mit Unterbrechungsschaltung. Die Hauptphasenleitung 201 durchläuft die Sicherung 207 und mündet im beweglichen Glied des Wechselkontakt-Schaltausgangs (Relais) 301, welches im ungeschalteten Zustand mit dem beweglichen Glied des Weiteren Wechselkontakt-Schaltausgangs (Relais) 301 verbunden ist, welches eine Verbindung mit einer Leitung zu einem Entnahmegerät 208 herstellt.

**Figur 7** zeigt eine beispielhafte Anwendung bei der Verknüpfung von zwei Mehrfamilienhäusern über ein Verteilernetz, bei dem ein Mehrfamilienhaus über eine Photovoltaikanlage (PV-Anlage) 1000 verfügt. Ein erstes Haus 100 verfügt über mehrere Entnahmestellen, welche mit einer Vorrichtungsvariante 800 ausgestattet sind. Diesen werden über den Stromkreisverteiler 103 durch eine Verteilerleitung 204 mit dem Hausanschlusskasten 101 verbunden und können so dem Verteilernetz 900 elektrische Energie entnehmen. Ein weiteres Haus 100 verfügt über eine PV-Anlage 1000 welche über einen Wechselrichter 1001 mit dem Eingang Phase 501 des Erfassungsmoduls 500 verbunden ist. Der Ausgang Phase 502 des Erfassungsmoduls 500 ist mit dem Hausanschlusskasten 101 verbunden, wodurch elektrische Energie in das Verteilernetz 900 eingespeist werden kann. Die Vorrichtungsvarianten 800 sowie das Erfassungsmodul 500 senden Daten über ein Übertragungsmedium in ein Datennetz (Internet) 1300 an einen Server 1400, auf welchem die Daten durch den integrierten Managementserver 1401, Datenbankserver 1402 und Abrechnungsserver 1403 verarbeitet werden.

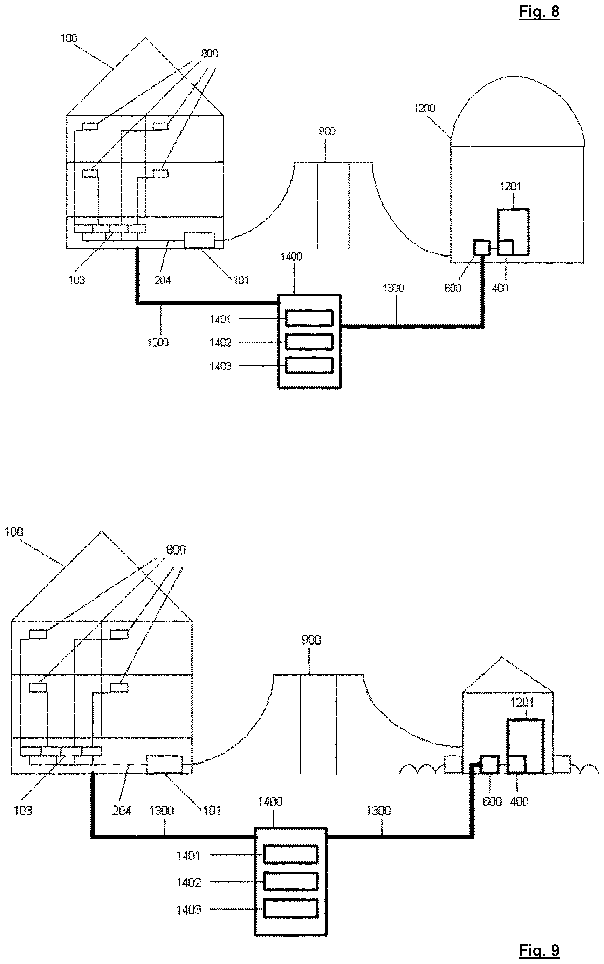

**Figur 8** zeigt eine beispielhafte Anwendung für die Verknüpfung von einem Mehrfamilienhaus mit einer Erneuerbare Energien Anlage 1200, hier z.B. eine Biogasanlage. Ein Haus 100 verfügt über mehrere Entnahmestellen, welche mit einer Vorrichtungsvariante 800 ausgestattet sind. Diesen werden über den Stromkreisverteiler 103 durch eine Verteilerleitung 204 mit dem Hausanschlusskasten 101 verbunden und können so dem Verteilernetz 900 elektrische Energie entnehmen. Die Erneuerbare Energien Anlage 1200, hier z.B. eine Biogasanlage, sendet über ein im Schaltkasten 1201 installiertes Managementmodul 400 mittels eines Routers/Gateway's 600 Daten über ein Übertragungsmedium in ein Datennetz (Internet) 1300 an den Server 1400. Die Vorrichtungsvariante 800 sendet Daten über ein Übertragungsmedium in ein Datennetz (Internet) 1300 an den Server 1400, welcher die Daten der Vorrichtungsvariante 800 und der Erneuerbare Energien Anlage 1200, hier z.B. eine Biogasanlage, durch den integrierten Managementserver 1401, Datenbankserver 1402 und Abrechnungsserver 1403 verarbeitet.

**Figur 9** zeigt eine beispielhafte Anwendung für die Verknüpfung von einem Mehrfamilienhaus mit einer Erneuerbare Energien Anlage 1200, hier z.B. eine Wasserkraftanlage. Ein Haus 100 verfügt über mehrere Entnahmestellen, welche mit einer Vorrichtungsvariante 800 ausgestattet sind. Diesen werden über den Stromkreisverteiler 103 durch eine Verteilerleitung 204 mit dem Hausanschlusskasten 101 verbunden und können so dem Verteilernetz 900 elektrische Energie entnehmen. Die Erneuerbare Energien Anlage 1200, hier z.B. eine Wasserkraftanlage, sendet über ein im Schaltkasten 1201 installiertes Managementmodul 400 mittels eines Routers/Gateway's 600 Daten über ein Übertragungsmedium in ein Datennetz (Internet) 1300 an den Server 1400. Die Vorrichtungsvariante 800 sendet Daten über ein Übertragungsmedium in ein Datennetz (Internet) 1300 an den Server 1400, welcher die Daten der Vorrichtungsvariante 800 und der Wasserkraftanlage 1200 durch den integrierten Managementserver 1401, Datenbankserver 1402 und Abrechnungsserver 1403 verarbeitet.

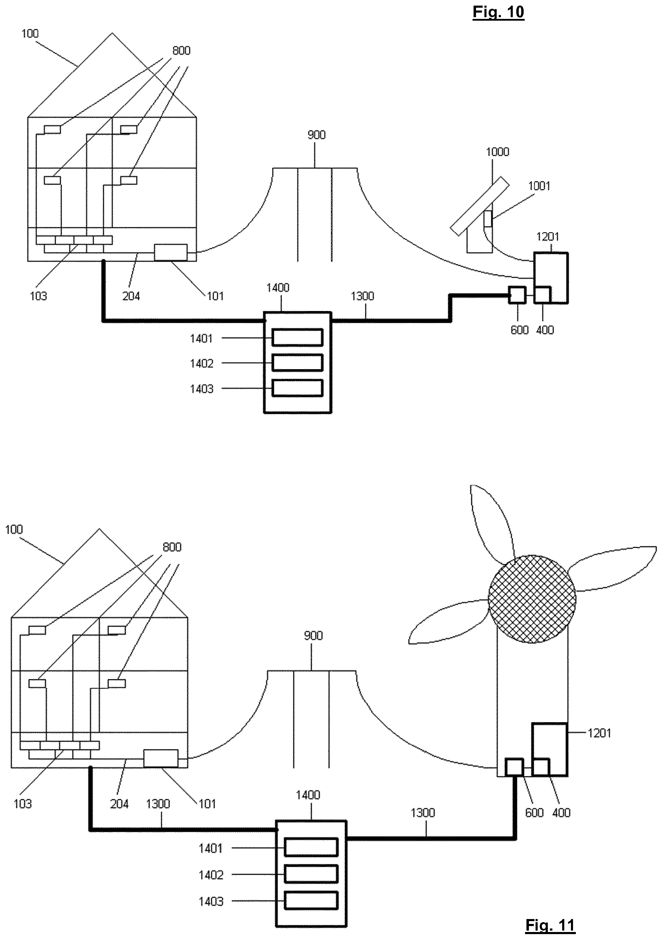

**Figur 10** zeigt eine Beispielhafte Anwendung für die Verknüpfung mit einer freistehenden Photovoltaikanlage (PV-Anlage) 1000. Ein Haus 100 verfügt über mehrere Entnahmestellen, welche mit einer Vorrichtungsvariante 800 ausgestattet sind. Diesen werden über den Stromkreisverteiler 103 durch eine Verteilerleitung 204 mit dem Hausanschlusskasten 101 verbunden und können so dem Verteilernetz 900 elektrische Energie entnehmen. Die PV-Anlage 1000 ist über einen Wechselrichter 1001 mit dem Schaltkasten 1201 verbunden, welcher mit dem Verteilernetz 900 verbunden ist, wodurch elektrische Energie eingespeist werden kann. Die PV-Anlage 1000 sendet über ein installiertes Managementmodul 400 mittels eines Routers/Gateway's 600 Daten über ein Übertragungsmedium in ein Datennetz (Internet) 1300 an den Server 1400. Die Vorrichtungsvariante 800 sendet Daten über ein Übertragungsmedium in ein Datennetz (Internet) 1300 an den Server 1400, welcher die Daten der Vorrichtungsvariante 800 und der PV-Anlage 1000 durch den Server 1400 integrierten Managementserver 1401, Datenbankserver 1402 und Abrechnungsserver 1403 verarbeitet.

**Figur 11** zeigt eine beispielhafte Anwendung für die Verknüpfung eines Mehrfamilienhauses mit einer Erneuerbare Energien Anlage 1200, hier z.B. eine Windenergieanlage. Ein Haus 100 verfügt über mehrere Entnahmestellen, welche mit einer Vorrichtungsvariante 800 ausgestattet sind. Diesen werden über den Stromkreisverteiler 103 durch eine Verteilerleitung 204 mit dem Hausanschlusskasten 101 verbunden und können so dem Verteilernetz 900 elektrische Energie entnehmen. Die Windenergieanlage 1200 sendet über ein im Schaltkasten 1201 installiertes Managementmodul 400 mittels eines Routers/Gateway's 600 Daten über ein Übertragungsmedium in ein Datennetz (Internet) 1300 an den Server 1400. Die Vorrichtungsvariante 800 sendet Daten über ein Übertragungsmedium in ein Datennetz(Internet) 1300 an den Server 1400, welcher die Daten der Vorrichtungsvariante 800 und der Windenergieanlage 1200 durch den integrierten Managementserver 1401, Datenbankserver 1402 und Abrechnungsserver 1403 verarbeitet.

**Figur 12** zeigt die verschiedenen Netzebenen mit der Einsatzmöglichkeit der Erfindung auf Netzebene. Elektrische Energie wird in ein Verteiler 900 oder Verteilungsnetz auf Hochspannungsebene 903 oder Mittelspannungsebene 902 eingespeist. Um die Übertragungsverluste bei langen Transportwegen zu minimieren, kann die elektrische Energie über eine oder mehrere Transformatorenstationen 905 in die Höchstspannungsebene 904 übertragen werden. Um die elektrische Energie für die gängigen Entnahmestellen nutzbar zu machen, kann diese auch über eine oder mehrere Transformatorenstationen 905 in die Niederspannungsebene 901 übertragen werden. Die Niederspannungsebene 901 kann in mehrere Entnahmezweige 201 geteilt werden, welcher unter der Verwendung einer geeigneten Schaltvorrichtung (Schütz) 209 durch eine Variante der erfindungsgemäßen Vorrichtung 800 geschaltet werden kann.

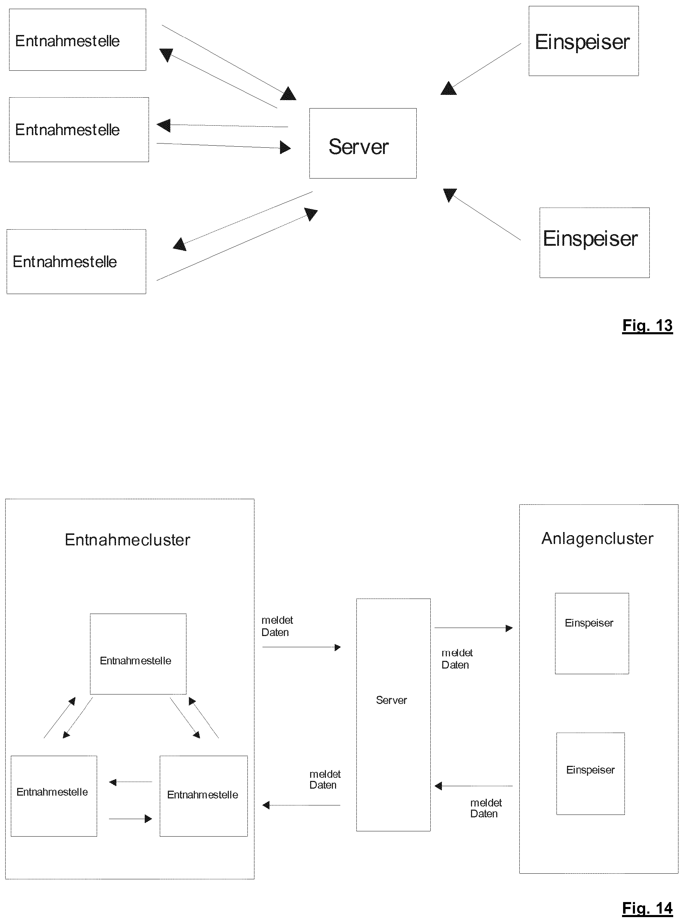

**Figur 13** zeigt die Kommunikation zwischen mehreren Einspeisern und Entnahmestellen die sich nicht in unmittelbarer Nähe zueinander befinden. Die Einspeiser melden ihre Einspeisungsmenge an den Server. Die Entnahmestellen senden Ihren Bedarf an den Server und erhalten eine Zuweisung zu einem oder mehreren Einspeisern um den gemeldeten Bedarf zu decken.

**Figur 14** zeigt die Kommunikation zwischen mehreren Einspeisern und Entnahmestellen, welche sich in unmittelbarer Nähe zueinander befinden und zu einem Verbund zusammengefasst wurden. Die Entnahmestellen können untereinander kommunizieren und im Falle, dass ein Kommunikationsweg unterbrochen wird, kann ein anderer in Anspruch genommen werden. Es werden mehrere Einspeiser zu einem Verbund zusammengefasst, welcher die aufsummierte Einspeisemenge an den Server sendet. Der Gesamtbedarf des Entnahmeclusters wird an den Server gesendet und einem Anlagencluster zur Deckung des Bedarfs zugewiesen.

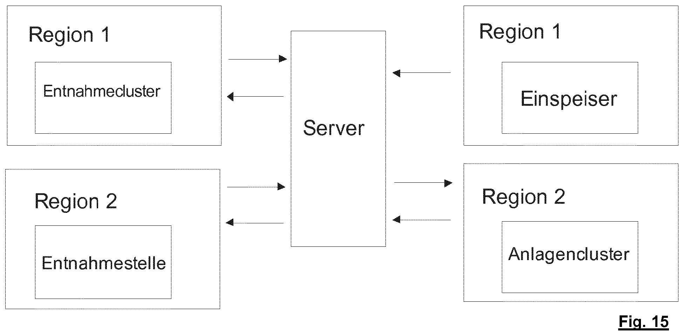

**Figur 15** die Kommunikation zwischen mehreren Einspeisern und Entnahmestellen, die sich sowohl in räumlicher Nähe zueinander befinden, als auch nicht und nach Ihrem regionalen Standort zusammengefasst sind und nach diesem auch zusammengeführt werden. In einer geographischen Region können sich einzelne oder mehrere Entnahmestellen befinden. Diese können sich innerhalb der Region in räumlicher Nähe zueinander befinden oder nicht. In einer geographischen Region können sich einzelne oder mehrere Einspeisungsanlagen befinden. Diese können sich innerhalb der Region in räumlicher Nähe zueinander befinden oder nicht. Die Einspeisungsmenge einer Region wird durch die Aufsummierung der Einspeisemengen von vorhandenen Einspeisungsanlagen oder Anlagencluster innerhalb einer Region ermittelt.

Der Bedarf einer Entnahmestelle oder eines Entnahmeclusters wird innerhalb der Region aufsummiert und als Gesamtbedarf für die Region 1 und 2 an den Server gesendet und mit den Einspeisungsanlagen der gleichen Region verknüpft. Wenn die Einspeisungsmenge den Bedarf übersteigt, kann wie bei der Verknüpfung von Region 2 beispielhaft gezeigt eine verlustfreie Regelung der Einspeisungsanlagen erfolgen.

Nachfolgend wird ein weiterer Aspekt der Erfindung ausgeführt, wobei auch dies die Erfindung in ihrer allgemeinen Form nicht einschränken soll, sondern lediglich weiter erläutern soll:

Das Verfahren kann zur Erkennung zukünftiger Lastgänge verwendet werden, wobei ein Lastsprung die Differenz aus zwei Lastgängen ist, welche durch eine Schaltung herbeigeführt wird. Wenn beispielsweise bei einer Entnahmelast von 600 Watt nach einer Schaltung lediglich eine Entnahmelast von 400 Watt gemessen wird, so beträgt der Lastsprung -200 Watt. Der Lastsprung wird also aus dem aktuellen Lastgang abzüglich des Lastgangs vor Schaltung gemessen. Je nach Größe des geschalteten Lastgang und Feinauflösung der Messtechnik ist es sinnvoll für die Messung des Lastsprungs ein geeignetes Zeitintervall festzulegen.

Eine Schaltung löst einen Lastsprung aus, welcher sich direkt auf den aktuellen Lastgang auswirkt. Wird eine Entnahmestelle mit mehreren schaltbaren Elementen betrieben, so kann der Lastsprung und der daraus resultierende Lastgang den Zuständen der Schaltelemente zugeordnet werden. Somit ist jeder Lastsprung und jeder Lastgang, welcher schaltungsabhängig verursacht wird, bekannt, sofern er mindestens einmal aufgetreten ist. Sollte sich ein schaltungsabhängiger Lastgang ändern, so wird der vermerkte Lastgang nach erstmaliger Ausführung angepasst.

Aufgrund der bekannten Beziehung zwischen Lastsprung und Schaltung ist der zu erwartende Lastgang bekannt, sobald ein Signal zur Schaltung gegeben wird. Es ist also ein Lastgangbedarf bekannt, bevor dieser tatsächlich eintritt. Dieser Bedarf kann datentechnisch verarbeitet werden, bevor es zu der entsprechenden Schaltung kommt. Betrachtet man nun zwei Zeitintervalle hat man also einen aktuellen Lastgang und einen Lastgang, welcher im folgenden Zeitintervall auftreten wird.

Die Wahrnehmung von optischen Veränderungen beträgt 20-40 ms, also gut 30 ms im Mittel, sofern die wahrnehmende Person mit der Änderung vertraut ist und sich auf diese konzentriert. Bei nicht vorhersehbaren Änderungen, beispielsweise im Straßenverkehr, wurden im groben Mittel Wahrnehmungszeiten von 100 ms bis 300 ms ermittelt.

Werden beide Mittelwerte miteinander gemittelt, so ergibt sich bei gemischter Konzentration und Kenntnis der eintretenden Änderung eine Wahrnehmungszeit von 115 ms. Sollte eine Schaltung eine Veränderung der direkten Umwelt des Nutzers auslösen, sollte diese innerhalb der Wahrnehmungszeit stattfinden.

Mit den gegenwärtigen technischen Möglichkeiten ist es problemlos möglich, entsprechende Lastgänge und Voraussagen im Sekundentakt zu erheben. Im Test wurde ein Datenpaket von Kiel an einen Server in Berlin versendet, welches zwischen 21 und 32 ms Sekunden für die Rundreise benötigt hat. Vereinzelt sind auch Zeiten von 42 ms aufgetreten. Im Mittel beträgt die Zeit für die komplette Rundreise also 31,5 ms. Ausgegangen von einer linearen Rundreise ist der Bedarf also bereits 15,75 ms nach Auslösung der Schaltung gemeldet.

In der synchronen Variante wird der Bedarf gemeldet und die Schaltung wird abhängig von der Rückmeldung ausgeführt. In der asynchronen Variante erfolgt die Schaltung direkt nach erfolgter Sendung des Bedarfs.

Bezugszeichenliste

| | | | |
|---|---|---|---|
| 100 | Haus | 412 | I/O |
| 101 | Hausanschlusskasten | 413 | microSD-Slot |
| 102 | Stromleitung (1/3 Phasen) | 414 | WLAN |
| 103 | Stromkreisverteiler | 415 | Stromversorgung |
| 200 | Sicherungskasten | 500 | Erfassungsmodul |
| 201 | Hauptphasenleitung | 501 | Eingang Phase |
| 202 | Hauptschalter | 502 | Ausgang Phase |
| 203 | Hutschiene mit Sicherungen | 503 | Datenschnittstelle |
| 204 | Verteilerleitung | 600 | Router/Gateway |
| 205 | Verteilerschiene | 601 | LAN |
| 206 | Netzteil | 602 | WLAN |
| 207 | Sicherung | 603 | Stromversorgung |
| 208 | Leitung zum Entnahmegerät | 700 | Netzteil |
| 209 | Schütz | 701 | Eingang |
| 300 | Schaltmodul | 702 | Ausgang |
| 301 | Wechselkontakt-Schaltausgang (Relais) | 800 | Vorrichtungsvariante |
| 302 | serieller Eingang | 900 | Verteilernetz |
| 303 | serieller Ausgang | 901 | Niederspannungsnetz |
| 304 | Sicherung | 902 | Mittelspannungsnetz |
| 305 | Kabelkanal | 903 | Hochspannungsnetz |
| 306 | Schutzhülle | 904 | Höchstspannungsnetz |
| 307 | Stromversorgung | 905 | Transformatorenstation |
| 400 | Managementmodul | 1000 | PV-Anlage |
| 401 | LAN | 1001 | Wechselrichter |
| 402 | USB | 1100 | Zubehör |
| 403 | HDMI | 1101 | Kabel mit 2 isolierten Adern Kupfer |
| 404 | Audio | 1200 | Erneuerbare Energien Anlage |
| 405 | GPIO | 1201 | Schaltkasten |
| 406 | UART TX | 1300 | Übertragungsmedium in ein Datennetz |
| 407 | UART RX | 1400 | Server |
| 408 | CSI | 1401 | Managementserver |
| 409 | DSI | 1402 | Datenbankserver |
| 410 | $I^2C$ | 1403 | Abrechnungsserver |
| 411 | SPI | | |

**Patentansprüche**

1. Energieverteilungsverfahren für

   - wenigstens zwei Verbrauchsstellen mit jeweils zugeordneten Energie-Verbrauchs-Datenverarbeitungseinheiten, die Entnahmedaten erfassen, und

- wenigstens zwei Energieerzeugungsstellen mit jeweils vorgesehenen Energie-Erzeugungs-Datenverarbeitungseinheiten, die Einspeisungsdaten erfassen, wobei wenigstens eine der Energieerzeugungsstellen eine Erneuerbare-Energien-Anlage ist,

wobei die Energie von wenigstens einer der Energieerzeugungsstellen über ein Energieverteilnetz zu wenigstens einer der Verbrauchsstellen übertragen wird, und wenigstens eine übergeordnete Energie-Datenverarbeitungsanlage zur Verarbeitung, Steuerung und Auswertung der zu verteilenden Energie vorgesehen ist, aufweisend die kontinuierlich ablaufenden Schritte:

- Erfassen des Energiebedarfs und/oder der Energiebedarfsänderung mittels der Energie-Verbrauchs-Datenverarbeitungseinheiten und Übermitteln des erfassten Energiebedarfs und/oder der erfassten Energiebedarfsänderung an die übergeordnete Energie-Datenverarbeitungsanlage;
- Erfassen der zur Verfügung stehenden hergestellten Energie / Energieleistung und/oder Energieleistungsänderung mittels der Energie-Erzeugungs-Datenverarbeitungseinheit und Übermitteln der erfassten Energie / Energieleistung an die wenigstens eine übergeordnete Energie-Datenverarbeitungsanlage;
- Bilanzieren der Energieentnahme und Energieerzeugung;

**dadurch gekennzeichnet, dass**
die Entnahmedaten an jeder Verbrauchsstelle als sensible und schützenswerte Daten nur lokal in der jeweiligen zugeordneten Energie-Verbrauchs-Datenverarbeitungseinheit gespeichert werden, wobei diese Daten für die Übertragung anonymisiert als zu einer Nutzer-ID zugewiesene Entnahmewerte mit entsprechenden Entnahmewerten, die weiteren Verbrauchsstellen zugehören, zu einem regionalen Gesamtentnahmewert aufsummiert werden, und der regionale Gesamtentnahmewert an die übergeordnete Energie-Datenverarbeitungsanlage übertragen wird, und die Einspeisungsdaten an den jeweiligen Energie-Erzeugungs-Datenverarbeitungseinheiten erfasst werden und anonymisiert an die übergeordnete Energie-Datenverarbeitungsanlage übermittelt werden,
in wenigstens einer Verbrauchsstelle wenigstens ein vorwählbares später automatisch fernstartbares Verbrauchsgerät mit bekanntem Energieverbrauch für eine zukünftige Inbetriebnahme unter Hinzunahme der Nutzung der Energie-Verbrauchs-Datenverarbeitungseinheiten und entsprechender Übermittlung an die übergeordnete Energie-Datenverarbeitungsanlage freigegeben wird, wobei deren Start und damit Energieentnahme aus dem Energieverteilnetz durch die übergeordnete Energie-Datenverarbeitungsanlage oder den Verbraucher selbst ausgeführt wird, wobei die Energieversorgung des Verbrauchsgerätes zeitverzögert erfolgt, nämlich

- bei manueller Aktivierung eines Verbrauchsgerätes in der Verbraucherstelle die Zeitverzögerung im Bereich von 20 bis 100 ms oder 25 bis 60 ms oder 30 bis 50 ms liegt
oder
- bei durch die übergeordnete Energie-Datenverarbeitungsanlage initiierten Aktivierung die Zeitverzögerung im Bereich von 20 ms bis zu mehreren Tagen oder Wochen liegt, je nachdem, welche maximale Wartezeit und/oder Aktivierungs-Zeitfenster durch den Verbraucher oder durch das Verbrauchsgerät spezifiziert wird,

womit vor der Entstehung des Strombedarfs der Bedarf gemeldet wird, so dass ein bedarfsgerechtes Schalten erreicht wird.

2. Energieverteilungsverfahren nach Anspruch 1,
**dadurch gekennzeichnet, dass**
bei Prognose durch Prognosesensoren / -modelle für Erneuerbare-Energie-Anlagen und / oder Detektion einer erhöhten zur Verfügung stehenden Energie/ Energieleistung durch die wenigstens eine Erneuerbare-Energien-Anlage eine Fernaktivierung durch die übergeordnete Energie-Datenverarbeitungsanlage in wenigstens einer Verbrauchsstelle wenigstens des einen vorgewählten fernstartbaren Verbrauchsgerätes mit bekanntem Energieverbrauch erfolgt, so dass Energie in dem Verbrauchsgerät verbraucht wird, wobei dieser Verbrauch durch den Verbraucher gewollt und akzeptiert ist.

3. Energieverteilungsverfahren nach einem der vorangehenden Ansprüche,
**dadurch gekennzeichnet, dass**
bei Detektion eines erhöhten Energiebedarfs eine durch die übergeordnete Energie-Datenverarbeitungsanlage initiierte zusätzliche Aktivierung einer Energieeinspeisung durch eine Energieerzeugungsstelle und/oder eines Energiespeichers erfolgt.

4. Energieverteilungsverfahren nach dem vorangehenden Anspruch,

**dadurch gekennzeichnet, dass**
erst im Anschluss an die Energieeinspeisung durch eine der Energieerzeugungsstellen eine Entnahme an der Verbrauchsstelle erfolgt.

5. Energieverteilungsverfahren nach einem der vorangehenden Ansprüche,
**dadurch gekennzeichnet, dass**
wenigstens ein Energiespeicher innerhalb des Energieverteilernetzes vorgesehen ist, wobei eine zusätzliche Speicherung durch die übergeordnete Energie-Datenverarbeitungsanlage initiiert wird.

6. Energieverteilungsverfahren nach einem der vorangehenden Ansprüche,
**dadurch gekennzeichnet, dass**
das Energieverteilnetz mit den daran angeschlossenen Verbrauchsstellen und Energieerzeugungsstellen in Abschnitte aufgeteilt wird.

7. Energieverteilungsverfahren nach dem vorangehenden Anspruch,
**dadurch gekennzeichnet, dass**
die Verbrauchsstellen und Einspeisestellen mittels einer hierarchischen Schichtenarchitektur referenziert werden, wobei dies über die Gemeinde und/oder den Kreis und/oder das Bundesland und/oder das Land erfolgt, insbesondere über eine Verwaltungsstruktur des Landes, wobei durch die übergeordnete Energie-Datenverarbeitungsanlage Energiebilanzen entsprechend der Schichtenarchitektur auf den einzelnen Schichten gebildet werden.

8. Energieverteilungsverfahren nach einem der zwei vorangehenden Ansprüche,
**dadurch gekennzeichnet, dass**
das Verteilen und Verbrauchen der Energie mit kurzen Distanzen erfolgt.

9. Energieverteilungsverfahren nach einem der vorangehenden Ansprüche,
**dadurch gekennzeichnet, dass**
die übergeordnete Energie-Datenverarbeitungsanlage Energiebilanzen bildet nach:

$$s_0 = \sum_{i=0}^{|S|} z_{i2} - z_{i1} \; \text{ für alle } z_1 \in V\,B \text{ und } z_2 \in EB \text{ mit } V\,B \times EB \in S$$

$$s_1 = s_0 + \sum_{i=0}^{|RB|} z_i \; \text{ für alle } z \in RB$$

mit

V := {x | x ist Verbraucher}
E := {x | x ist Einspeiser}
G := {x | x ist Verwaltungsschlüssel}   $P := \{x \mid x \in \mathbb{R}\}$
R:= {x | x ∈ {0,1}$^8$}

$$VG \subseteq V \times G$$

$$EG \subseteq E \times G$$

$$V\,B \subseteq V\,G \times P$$

$$EB \subseteq EG \times P$$

$$RB \subseteq R \times P$$

$$S \subseteq VB \times EB$$

VG:= {(x,y) | y ist Standort von x}

EG:= {(x,y) | y ist Standort von x}

V B:= {((x,y), z) | z ist Strombedarf des Verbraucher x am Standort y}

EB:= {((x,y), z) | z ist Einspeisung des Einspeisers x am Standort y}

RB:= {((x_1, x_2, x_3, x_4, x_5, x_6, x_7, x_8),z) | z ist Lastsprung durch

Relaisstellung $x_1, x_2, x_3, x_4, x_5, x_6, x_7, x_8$}

S:= {(((x_1 y_1), z_1); ((x_2, y_2), z_2)) | y_1 = y_2}

V R:= {(((x_1, x_2, x_3, x_4, x_5, x_6, x_7, x_8), z), x) | z ist Lastsprung der Relaisstellung für Verbraucher x

ST:= {((x_1,y_1), z_1),((x_2,y_2), z_2)) | y_1 = y_2 und y_1 ist fix gesetzt}

10. Energieverteilungsverfahren nach einem der vorangehenden Ansprüche,
**dadurch gekennzeichnet, dass**
zur Steuerung und/oder Auswertung und/oder Kontrolle und/oder Schaltung und/oder Aktivierung / Deaktivierung von Energie weiter vorgesehen sind, ausgewählt ein oder mehrere Geräte, auch in Kombination miteinander, aus der Liste:

- in der übergeordnete Energie-Datenverarbeitungsanlage:

  - Server;
  - Managementserver (1401);
  - Datenbankserver (1402);
  - Abrechnungsserver (1403);

- in der Energie-Erzeugungs-Datenverarbeitungseinheiten:

  - Erfassungsmodul (500);
  - Managementmodul (400);
  - Schaltmodul (300);

- in der Energie-Verbrauchs-Datenverarbeitungseinheiten:

  - Erfassungsmodul (500);
  - Managementmodul (400);
  - Schaltmodul (300);

wobei
- das jeweilige Schaltmodul (300) das jeweilige Betriebsgerät und/oder die jeweilige Einspeisungsanlage steuert,
- das jeweilige Schaltmodul (300) das jeweilige Betriebsgerät und/oder die jeweilige Einspeisungsanlage steuert,
- das jeweilige Erfassungsmodul (500) eine Inbetriebnahme des jeweiligen Schaltmoduls (300) und einen Status eines Energieflusses detektiert, parametrisiert und die Information an das jeweilige Managementmodul (400) sendet,
- das jeweilige Managementmodul (400) Schaltsignale an das jeweilige Schaltmodul (300) sendet und vom jeweiligen Schaltmodul (300) eine Rückmeldung über einen Schaltstatus erhält, in welchem Zustand es sich befindet,
- das jeweilige Managementmodul (400) Entnahmedaten und optional Informationen über den Schaltstatus an den jeweiligen Server sendet,
- der jeweilige Einspeiser (1200) eine Einspeisungsmenge und weitere Betriebsdaten als Einspeisungsdaten an das jeweilige Managementmodul (400) sendet, wobei das jeweilige Managementmodul (400) diese Daten an den jeweiligen Server (1400) sendet,
- der jeweilige Server (1400) die Einspeisungsdaten mit den Informationen über den Schaltzustand einer jeweiligen Entnahmestelle empfängt,

- der jeweilige Server (1400) die Einspeisungsdaten und weitere Betriebsdaten eines jeweiligen Einspeisers (1200) empfängt,
- die Instanz Datenbankserver (1402) jeden Datensatz vom jeweiligen Einspeiser (1200) und von der jeweiligen Entnahmestelle eindeutig einander zuordnet,
- die Instanz Abrechnungsserver (1403) Einspeisungs- und Entnahmemengedaten nach definierten Kriterien zusammenführt,
- die Instanz Managementserver (1401) Schaltsignale an die jeweilige Entnahmestelle sendet.

**11.** Energieverteilungsverfahren nach einem der vorangehenden Ansprüche,
**dadurch gekennzeichnet, dass**
die durch die übergeordnete Energie-Datenverarbeitungsanlage initiierte Energieentnahme und/oder Energieherstellung und/oder Energielieferung mit einem anderen Energietarif abgerechnet wird.


**Claims**

**1.** Energy distribution method for

- at least two consumption points with respectively associated energy consumption data processing units which record withdrawal data, and
- at least two energy generation stations with respectively provided energy generation data processing units which record feed-in data, wherein at least one of the energy generation stations is a renewable energy plant,

wherein the energy is transmitted from at least one of the energy generation stations via an energy distribution network to at least one of the consumer stations, and at least one superordinate energy data processing unit is provided for processing, controlling and evaluating the energy to be distributed,
comprising the continuously running steps of:

- detecting the energy demand and/or the energy demand change by means of the energy consumption data processing units and transmitting the detected energy demand and/or the detected energy demand change to the superordinate energy data processing unit;
- detecting the available produced energy/energy output and/or energy output change by means of the energy production data processing unit and transmitting the detected energy/energy output to the at least one superordinate energy data processing unit;
- balancing the energy withdrawal and energy production;

**characterised in that**
the withdrawal data at each consumption point is stored as sensitive data worthy of protection only locally in the respective associated energy-consumption data processing unit, wherein these data are summed up for transmission in anonymised form as withdrawal values assigned to a user ID with corresponding withdrawal values belonging to further consumption points to form a regional total withdrawal value, and the regional total withdrawal value is transmitted to the superordinate energy-data processing system, and
the feed-in data are recorded at the respective energy generation data processing units and are transmitted anonymously to the superordinate energy data processing installation, in at least one consumption point at least one preselectable consumption appliance which can later be automatically remote-started with known energy consumption is released for a future start-up with the addition of the use of the energy consumption data processing units and corresponding transmission to the superordinate energy data processing installation, wherein their start and thus energy withdrawal from the energy distribution network is carried out by the superordinate energy data processing system or the consumer itself,
wherein the energy supply to the consumer appliance takes place with a time delay, namely

- in the case of manual activation of a consumer appliance in the consumer unit, the time delay lies in the range from 20 to 100 ms or 25 to 60 ms or 30 to 50 ms,
or
- in the case of activation initiated by the superordinate energy data processing system, the time delay lies in the range from 20 ms to several days or weeks, depending on the maximum waiting time and/or activation time window specified by the consumer or by the consumer device,

with which the demand is signaled before the power demand arises, so that demand-responsive switching is achieved.

2. Energy distribution method according to claim 1,
   **characterised in that**
   in the event of a forecast by forecast sensors/models for renewable energy systems and/or detection of increased available energy/energy output by the at least one renewable energy system, remote activation by the superordinate energy data processing system takes place in at least one consumption point of at least the one preselected remote-startable consumer device with known energy consumption, so that energy is consumed in the consumer device, wherein this consumption is desired and accepted by the consumer.

3. Energy distribution method according to one of the preceding claims,
   **characterized in that**
   upon detection of an increased energy demand, an additional activation of an energy feed by an energy generation station and/or an energy storage device initiated by the superordinate energy data processing system takes place.

4. Energy distribution method according to the preceding claim,
   **characterised in that**
   a withdrawal takes place at the consumption point only after the energy has been fed in by one of the energy generation stations.

5. Energy distribution method according to any one of the preceding claims,
   **characterised in that**
   at least one energy storage is provided within the energy distribution network, wherein additional storage is initiated by the superordinate energy data processing system.

6. Energy distribution method according to one of the preceding claims,
   **characterized in that**
   the energy distribution network with the consumption points and energy generation stations connected thereto is divided into sections.

7. Energy distribution method according to the preceding claim,
   **characterized in that**
   the consumption points and feed-in points are referenced by means of a hierarchical layer architecture, wherein this is done via the municipality and/or the district and/or the federal state and/or the country, in particular via an administrative structure of the country, wherein energy balances are formed on the individual layers by the superordinate energy data processing system in accordance with the layer architecture.

8. Energy distribution method according to one of the two preceding claims,
   **characterised in that**

   the distribution and consumption of the energy takes place with short distances.

9. Energy distribution method according to one of the preceding claims,
   **characterized in that**
   the superordinate energy data processing system forms energy balances according to:

$$s_0 = \sum_{i=0}^{|S|} z_{i2} - z_{i1} \ for\ all\ z_1 \in V\,B\ and\ z_2 \in EB\ with\ V\,B\ \times EB \in S$$

$$s_1 = s_0 + \sum_{i=0}^{|RB|} z_i \ for\ all\ z \in RB$$

with

V := {x | x is consumer}

E := {x | x is feeder}

G := {x | x is administration key}  $P := \{x \mid x \in \mathbb{R}\}$

R:= {x | x ∈ {0,1}$^8$}

$$VG \subseteq V \times G$$

$$EG \subseteq E \times G$$

$$VB \subseteq VG \times P$$

$$EB \subseteq EG \times P$$

$$RB \subseteq R \times P$$

$$S \subseteq VB \times EB$$

VG:= {(x,y) | y is location of x}

EG:= {(x,y) | y is location of x}

V B:= {((x,y), z) | z is electricity demand of consumer x at the site y}

EB:= {((x,y), z) | z is feed-in of the feeder x at the site y}

RB:= {(($x_1, x_2, x_3, x_4, x_5, x_6, x_7, x_8$),z) | z is load change due to relay setting $x_1, x_2, x_3, x_4, x_5, x_6, x_7, x_8$}

S:= {((($x_1, y_1$), $z_1$); (($x_2, y_2$), $z_2$)) | $y_1 = y_2$}

V R:= {((($x_1, x_2, x_3, x_4, x_5, x_6, x_7, x_8$), z), x) | z is load change of the relay setting for consumer x

ST:= {(($x_1,y_1$), $z_1$),(($x_2,y_2$), $z_2$)) | $y_1 = y_2$ and $y_1$ is set fixed }

10. power distribution method according to any one of the preceding claims,
**characterised in that**
for controlling and/or evaluating and/or monitoring and/or switching and/or activating/deactivating energy, there are further provided, selected one or more devices, also in combination with each other, from the list:

- in the superordinate energy data processing equipment:

- Server;
- management server (1401);
- database server (1402);
- accounting server (1403);

- in the energy generation data processing units:

- Acquisition module (500);
- management module (400);
- switching module (300);

- in the energy consumption data processing units:

- Acquisition module (500);
- management module (400);
- switching module (300);

wherein

- the respective switching module (300) controls the respective operating device and/or the respective feed-in system,
- the respective switching module (300) controls the respective operating device and/or the respective feed system,
- the respective detection module (500) detects a start-up of the respective switching module (300) and a status of an energy flow, parameterises it and sends the information to the respective management module (400),
- the respective management module (400) sends switching signals to the respective switching module (300) and receives feedback from the respective switching module (300) about a switching status, in which state it is,
- the respective management module (400) sends extraction data and optionally information about the switching status to the respective server,
- the respective feeder (1200) sends a feed quantity and further operating data as feed data to the respective management module (400), wherein the respective management module (400) sends these data to the respective server (1400),
- the respective server (1400) receives the feed data with the information about the switching state of a respective extraction point,
- the respective server (1400) receives the feed-in data and further operating data of a respective feeder (1200),
- the instance database server (1402) uniquely assigns each data record from the respective feeder (1200) and from the respective extraction point to each other,
- the instance billing server (1403) combines feed-in and offtake data according to defined criteria,
- the instance management server (1401) sends switching signals to the respective extraction point.

11. energy distribution method according to one of the preceding claims,
**characterised in that**
the energy withdrawal and/or energy production and/or energy delivery initiated by the superordinate energy data processing system is billed with a different energy tariff.

## Revendications

1. Procédé de distribution d'énergie pour

- au moins deux points de consommation avec des unités de traitement de données de consommation d'énergie respectivement prévues qui enregistrent des données de prélèvement, et
- au moins deux points de production d'énergie avec des unités de traitement de données de production d'énergie respectivement prévues qui enregistrent des données d'alimentation, dans lequel au moins un des points de production d'énergie est une installation d'énergie renouvelable,

l'énergie étant transmise d'au moins un des points de production d'énergie à au moins un des points de consommation via un réseau de distribution d'énergie, et au moins un système de traitement des données énergétiques de niveau supérieur étant prévu pour le traitement, la commande et l'évaluation de l'énergie à distribuer, comportant les étapes suivantes, qui se déroulent en continu:

- détecter la demande d'énergie et/ou la variation de la demande d'énergie au moyen des unités de traitement des données sur la consommation d'énergie et transmettre la demande d'énergie détectée et/ou la variation de la demande d'énergie détectée à l'unité de traitement des données sur l'énergie de niveau supérieur;
- détecter l'énergie produite disponible/la production d'énergie et/ou la variation de la production d'énergie au moyen de l'unité de traitement des données sur la production d'énergie et transmettre l'énergie détectée/la production d'énergie à au moins une unité de traitement des données sur l'énergie de niveau supérieur;
- équilibrer le prélèvement et la production d'énergie;

**caractérisé en ce que**
les données de prélèvement à chaque point de consommation ne sont stockées comme données sensibles dignes de protection que localement dans l'unité de traitement des données de consommation d'énergie correspondante, ces données étant additionnées pour la transmission sous forme anonyme comme valeurs de prélèvement attribuées à un ID utilisateur avec des valeurs de prélèvement correspondantes appartenant à d'autres points de consommation pour former une valeur de prélèvement totale régionale, et la valeur de prélèvement totale régionale est transmise au système de traitement des données d'énergie de niveau supérieur,

et

les données d'alimentation sont enregistrées dans les unités de traitement des données de production d'énergie respectives et sont transmises anonymement à l'installation de traitement des données énergétiques de niveau supérieur, dans au moins un point de consommation, au moins un appareil de consommation présélectionnable qui peut être ultérieurement démarré automatiquement à distance et dont la consommation d'énergie est connue est libéré pour une mise en service future avec en plus l'utilisation des unités de traitement des données de consommation d'énergie et la transmission correspondante à l'installation de traitement des données énergétiques de niveau supérieur, dans lequel leur mise en service et donc leur prélèvement d'énergie sur le réseau de distribution d'énergie est effectué par le système de traitement des données énergétiques supérieur ou par le consommateur lui-même, l'alimentation en énergie de l'appareil consommateur étant retardée, à savoir

- en cas d'activation manuelle d'un appareil consommateur dans la station de consommation, le retard est compris entre 20 et 100 ms ou 25 et 60 ms ou 30 et 50 ms ou
- en cas d'activation déclenchée par le système de traitement des données énergétiques supérieur, le retard est compris entre 20 ms et plusieurs jours ou semaines, en fonction du temps d'attente maximum et/ou de la fenêtre de temps d'activation spécifiés par le consommateur ou par le dispositif de consommation,

avec lesquels la demande est signalée avant que la demande actuelle ne se manifeste, de sorte que la commutation est effectuée en fonction de la demande.

2. Procédé de distribution de l'énergie selon la revendication 1,
**caractérisé en ce que**
en cas de prévision par des capteurs/modèles de prévision pour les systèmes d'énergie renouvelable et/ou de détection d'une augmentation de l'énergie disponible/du rendement énergétique par le au moins un système d'énergie renouvelable, l'activation à distance est effectuée par le système de traitement des données énergétiques de niveau supérieur dans au moins un point de consommation d'au moins un appareil consommateur présélectionné et démarrable à distance avec une consommation d'énergie connue, de sorte que de l'énergie est consommée dans l'appareil consommateur, cette consommation étant souhaitée et acceptée par le consommateur.

3. Procédé de distribution de l'énergie selon l'une des revendications précédentes,
**caractérisé en ce que**
lors de la détection d'une demande d'énergie accrue, une activation supplémentaire d'un approvisionnement en énergie par une centrale électrique et/ou d'un dispositif de stockage d'énergie initié par le système de traitement des données énergétiques de niveau supérieur a lieu.

4. Procédé de distribution de l'énergie selon la revendication précédente,
**caractérisé en ce que**
ce n'est qu'après l'alimentation en électricité par l'un des points de production d'électricité qu'un retrait a lieu au point de consommation.

5. Procédé de distribution de l'énergie selon l'une des revendications précédentes,
**caractérisé en ce que**
au moins un dispositif de stockage d'énergie est prévu dans le réseau de distribution d'énergie, dans lequel un stockage supplémentaire est initié par le dispositif de traitement des données énergétiques de niveau supérieur.

6. Procédé de distribution de l'énergie selon l'une des revendications précédentes,
**caractérisé en ce que**
le réseau de distribution d'énergie avec les points de consommation et les points de production d'énergie qui y sont reliés est subdivisé en sections.

7. Procédé de distribution de l'énergie selon la revendication précédente,
**caractérisé en ce que**
les points de consommation et les points d'alimentation sont référencés au moyen d'une architecture en couches hiérarchique, ceci étant effectué par l'intermédiaire de la commune et/ou du district et/ou de l'État fédéral et/ou du pays, en particulier par l'intermédiaire d'une structure administrative du pays, des bilans énergétiques étant formés sur les différentes couches par le système de traitement des données énergétiques de niveau supérieur conformément à l'architecture en couches.

**8.** Procédé de distribution de l'énergie selon l'une des deux revendications précédentes, **caractérisé en ce que** la distribution et la consommation de l'énergie s'effectuent sur de courtes distances.

**9.** Procédé de distribution d'énergie selon l'une des revendications précédentes, **caractérisé en ce que** le système de traitement des données énergétiques supérieur forme des bilans énergétiques selon:

$$s_0 = \sum_{i=0}^{|S|} z_{i2} - z_{i1} \ pour \ tous \ les \ z_1 \in V\,B \ et \ z_2 \in EB \ avec \ V\,B \times EB \in S$$

$$s_1 = s_0 + \sum_{i=0}^{|RB|} z_i \ pour \ tous \ les \ z \in RB$$

avec

V := {x | x est le consommateur }
E := {x | x est chargeur}
G := {x | x est la clé de la gestion } $P := \{x \mid x \in \mathbb{R}\}$
R:= {x | x $\in$ {0,1}$^8$}

$$VG \subseteq V \times G$$

$$EG \subseteq E \times G$$

$$V\,B \subseteq V\,G \times P$$

$$EB \subseteq EG \times P$$

$$RB \subseteq R \times P$$

$$S \subseteq VB \times EB$$

VG:= {(x,y) | y est la localisation de x}
EG:= {(x,y) | y est la localisation de x}
V B:= {((x,y), z) | z est la demande d'électricité du consommateur x au site y }
EB:= {((x,y), z) | z est l'alimentation de la source x à la localisation y }
RB:= {(($x_1$, $x_2$, $x_3$, $x_4$, $x_5$, $x_6$, $x_7$, $x_8$),z) | z est le saut de charge dû à la position du relais $x_1$, $x_2$, $x_3$, $x_4$, $x_5$, $x_6$, $x_7$, $x_8$}
S:= {((($x_1$, $y_1$), $z_1$); (($x_2$, $y_2$), $z_2$)) | $y_1$ = $y_2$}
V R:= {((($x_1$, $x_2$, $x_3$, $x_4$, $x_5$, $x_6$, $x_7$, $x_8$), z), x) | z est le pas de charge de la position du relais pour le consommateur x
ST:= {(($x_1$,$y_1$), $z_1$),(($x_2$, $y_2$), $z_2$)) | $y_1$ = $y_2$ et $y_1$ est fixe}

**10.** Procédé de distribution d'énergie selon l'une des revendications précédentes, **caractérisé en ce que** pour la commande et/ou l'évaluation et/ou la surveillance et/ou la commutation et/ou l'activation/désactivation d'énergie sont en outre prévus, sélectionnés un ou plusieurs dispositifs, également en combinaison les uns avec les autres, de la liste :

- dans le système de traitement des données sur l'énergie :

- Serveur ;
- serveur de gestion (1401) ;
- serveur de base de données (1402) ;
- serveur de comptabilité (1403) ;

- dans les unités de traitement des données de production d'énergie :

- Module d'acquisition (500) ;
- Module de gestion (400) ;
- module de commutation (300) ;

- dans les unités de traitement des données sur la consommation d'énergie :

- Module d'acquisition (500) ;
- module de gestion (400) ;
- module de commutation (300) ;

où
- le module de commutation respectif (300) commande le dispositif de fonctionnement respectif et/ou le système d'alimentation respectif
- le module de commutation respectif (300) commande l'appareil de commande respectif et/ou le système d'alimentation respectif,
- le module de détection respectif (500) détecte un démarrage du module de commutation respectif (300) et un état d'un flux d'énergie, paramètre et envoie les informations au module de gestion respectif (400),
- le module de gestion respectif (400) envoie des signaux de commutation au module de commutation respectif (300) et reçoit un retour du module de commutation respectif (300) concernant un état de commutation, dans lequel il se trouve,
- le module de gestion respectif (400) envoie les données de retrait et, en option, des informations sur l'état de commutation au serveur respectif,
- le chargeur respectif (1200) envoie une quantité d'alimentation et d'autres données opérationnelles comme données d'alimentation au module de gestion respectif (400), dans lequel le module de gestion respectif (400) envoie ces données au serveur respectif (1400),
- le serveur respectif (1400) reçoit les données de flux avec les informations sur l'état de commutation d'un point d'extraction respectif,
- le serveur respectif (1400) reçoit les données d'alimentation et d'autres données de fonctionnement d'une alimentation respective (1200),
- le serveur de base de données d'instance (1402) attribue de manière unique chaque enregistrement de données provenant du feeder respectif (1200) et du point d'extraction respectif les uns aux autres,
- le serveur de facturation des instances (1403) fusionne les données d'alimentation et de prélèvement selon des critères définis,
- le serveur de gestion d'instance (1401) envoie des signaux de commutation au point d'extraction respectif.

11. Procédé de distribution d'énergie selon l'une des revendications précédentes,
**caractérisé en ce que**
le prélèvement et/ou la production et/ou la livraison d'énergie initié par le système de traitement des données énergétiques de niveau supérieur est facturé avec un tarif énergétique différent.

F I G U R E N

**Fig. 1**

**Fig. 2**

**Fig. 3**

208

301

207

201

**Fig. 4**

208

301

207

201

**Fig. 5**

208

301

207

201

**Fig. 6**

208

301

301

207

201

**Fig. 7**

100

800

100

1000

1001

800

900

501

500

502

103

204

101

101

103

204

101

1400

1300

1300

1401

1402

1403

**Fig. 8**

**Fig. 9**

**Fig. 10**

**Fig. 11**

904

905

903

905

902

905

901

800

201

201

209

**Fig. 12**

Entnahmestelle

Entnahmestelle

Entnahmestelle

Server

Einspeiser

Einspeiser

**Fig. 13**

Entnahmecluster

Entnahmestelle

Entnahmestelle

Entnahmestelle

meldet
Daten

Server

meldet
Daten

Anlagencluster

Einspeiser

Einspeiser

meldet
Daten

meldet
Daten

meldet
Daten

**Fig. 14**

Region 1

Entnahmecluster

Region 2

Entnahmestelle

Server

Region 1

Einspeiser

Region 2

Anlagencluster

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015111198 A1
- US 20100238003 A1
- CA 2850983 A1
- DE 102016101021 A1
- US 4819180 B1
- US 20140257584 A1
- DE 102011080830 A1
- DE 102012224128 A1